Europäisches Patentamt

European Patent Office

Office européen des brevets

(19)

(11) **EP 1 404 079 A2**

(12) **EUROPEAN PATENT APPLICATION**

(43) Date of publication:
**31.03.2004 Bulletin 2004/14**

(51) Int Cl.$^7$: **H04L 27/26**

(21) Application number: **03022220.2**

(22) Date of filing: **30.09.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** (30) Priority: **30.09.2002 KR 2002059615** **09.11.2002 KR 2002069471** (71) Applicant: **SAMSUNG ELECTRONICS CO., LTD.** **Suwon-City, Kyungki-do (KR)** (72) Inventors: • **Suh, Chang-Ho** **Seoul (KR)** | • **Jung, Dae-Kwon** **Suwon-si Gyeonggi-do (KR)** • **Joo, Pan-Yuh** **Gangnam-gu Seoul (KR)** • **Cao, FengMing** **Beijing (CN)** • **Wang, Hai** **Beijing (CN)** • **Chen, Jun** **Beijing (CN)** (74) Representative: **Grünecker, Kinkeldey, Stockmair & Schwanhäusser Anwaltssozietät Maximilianstrasse 58 80538 München (DE)** |

(54) **Generation of preamble sequences in an multicarrier communication system**

(57)  Disclosed is an apparatus and a method for generating a preamble sequence in an orthogonal frequency division multiplexing (OFDM) communication system having m subcarriers in a frequency domain. The method comprises grouping the m subcarriers by n subcarriers, where n is less than m,so as to generate p subchannels; and assigning null data to subcarriers except the n subcarriers assigned to the subchannels, assigning data of a given sequence to at least one subchannel selected from the p subchannels, assigning null data to subchannels not selected from the p subchannels, and thereafter performing inverse fast Fourier transform (IFFT) for transforming the data into time-domain data.

FIG.4

EP 1 404 079 A2

**Description**

BACKGROUND OF THE INVENTION

1 Field of the Invention

The present invention relates generally to an orthogonal frequency division multiplexing (OFDM) communication system, and in particular, to an apparatus and method for generating a preamble sequence for subchannelization.

2. Description of the Related Art

In general, a wireless communication system supporting a wireless communication service is comprised of Node Bs and user equipments (UEs). The Node B and the UE support a wireless communication service using transmission frames. Therefore, the Node B and the UE must mutually acquire synchronization for transmission and reception of transmission frames, and for the synchronization acquisition, the Node B transmits a synchronization signal so that the UE can detect the start of a frame transmitted by the Node B. The UE then determines frame timing of the Node B by receiving the synchronization signal transmitted by the Node B, and demodulates received frames according to the determined frame timing. Generally, a particular preamble sequence previously appointed by the Node B and the UE is used for the synchronization signal.

In addition, a preamble sequence having a low peak-to-average power ratio (hereinafter referred to as "PAPR") is used for the preamble sequence used in an OFDM communication system, and a preamble created by concatenating a long preamble necessary for performing coarse synchronization to a short preamble necessary for performing fine frequency synchronization is used for the preamble transmitted from a Node B to a UE. Further, only the short preamble is used for the preamble transmitted from the UE to the Node B for acquiring fine frequency synchronization. The reason that the preamble sequence having a low PAPR must be used as a preamble sequence of the OFDM communication system will now be described below. First, since the OFDM communication system, which is a multicarrier communication system, uses a plurality of carriers, i.e., a plurality of subcarriers, orthogonality between the subcarriers is important. Therefore, phases of the subcarriers are appropriately set so that orthogonality therebetween should be secured, and if the phases are changed during signal transmission/reception through the subcarriers, signals on the subcarriers overlap. In this case, the amplitude of the signals that overlap due to the phase change deviates from a linear region of an amplifier included in the OFDM communication system, disabling normal signal transmission/reception. This is the reason why the OFDM communication system uses a preamble sequence having a minimal PAPR.

Further, the OFDM communication system transmits data for several users, or UEs, by time-multiplexing one frame. In the OFDM communication system, a frame preamble indicating the start of a frame is transmitted for a predetermined period beginning at a start point of the frame. Since data may be irregularly transmitted to the respective UEs within one frame, a burst preamble indicting the start of data exists at a front part of each data block. Therefore, a UE must receive a data frame to identify a transmission start point of the data. The UE should be synchronized to a start point of data to receive data, and to this end, the UE must acquire a preamble sequence used in common by all systems before receiving signals.

The OFDM communication system is similar to a non-OFDM communication system in a source coding scheme, a channel coding scheme and a modulation scheme. While a code division multiple access (CDMA) communication system spreads data before transmission, the OFDM communication system performs inverse fast Fourier transform (hereinafter referred to as "IFFT") on data and inserts a guard interval in the IFFT-transformed data before transmission. Therefore, compared with the CDMA communication system, the OFDM communication system can transmit a wideband signal with relatively simple hardware. In the OFDM communication system, a parallel bit/symbol stream generated by parallel converting a plurality of serial bit/symbol streams is applied as a frequency-domain IFFT input after modulation is performed on data, and an IFFT-transformed time-domain signal is output. The time-domain output signal is obtained by multiplexing a wideband signal with several narrowband subcarrier signals, and a plurality of modulation symbols are transmitted for one-OFDM symbol period through the IFFT process.

However, in the OFDM communication system, if the IFFT-transformed OFDM symbol is transmitted one after another, interference between a previous OFDM symbol and a current OFDM symbol is unavoidable. To remove the inter-symbol interference, the guard interval is inserted. The guard interval is so proposed as to insert null data for a predetermined period. However, in a method of transmitting null data for the guard interval, if a receiver incorrectly estimates a start point of an OFDM symbol, interference occurs between subcarriers, causing an increase in an error probability of a received OFDM symbol. Therefore, a "cyclic prefix" scheme or a "cyclic postfix" scheme has been proposed for the guard interval. In the former scheme, last specific bits in a time-domain OFDM symbol are copied and then inserted at the front part of each effective OFDM symbol, and in the latter scheme, first specific bits in a time-domain OFDM symbol are copied and then inserted at the rear part of each effective OFDM symbol. The specific bits in the cyclic prefix scheme and the cyclic postfix scheme are preset bits, and a length of the specific bits is previously determined in the OFDM communication system. A receiver may acquire time/frequency synchronization using a method of copying a part of one time-domain OFDM symbol, i.e., a first part or a last part of one OFDM symbol, and then repeatedly arranging the copied OFDM symbols.

In wireless communication systems, a transmission signal transmitted by a transmitter is distorted while it passes through a radio channel, and thus, a receiver receives a distorted transmission signal. The receiver acquires time/frequency synchronization of the received distorted transmission signal, using a preamble sequence previously set between the transmitter and the receiver, performs channel estimation, and then demodulates the channel-estimated signal into frequency-domain symbols through fast Fourier transform (hereinafter referred to as "FFT"), After demodulating the channel-estimated signal into frequency-domain symbols, the receiver performs channel decoding and source decoding on the demodulated symbols corresponding to the channel coding applied in the transmitter, to thereby decode the demodulated symbols into information data.

The OFDM communication system uses a preamble sequence in performing frame timing synchronization, frequency synchronization and channel estimation. The OFDM communication system may perform frame timing synchronization, frequency synchronization and channel estimation using a guard interval and a pilot subcarrier in addition to the preamble. The preamble sequence is used to transmit known symbols at a beginning part of every frame or data burst, and update time/frequency/channel information estimations using information on the guard interval and the pilot subcarrier.

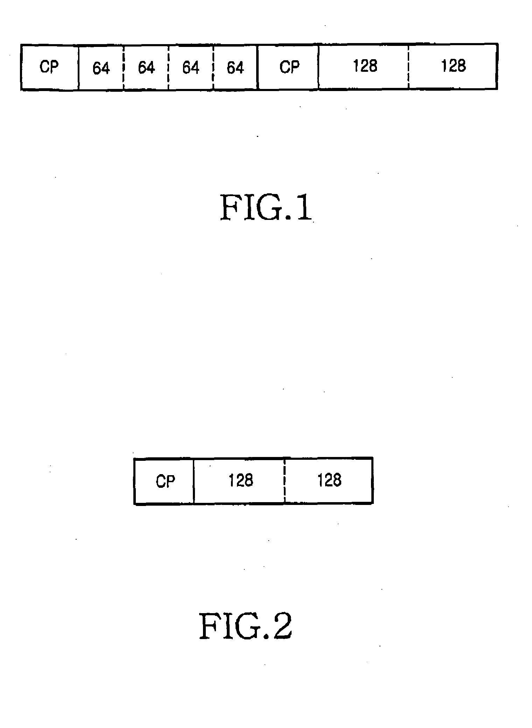

A structure of a preamble sequence used in a common OFDM communication system will now be described with reference to FIGs. 1 and 2.

FIG. 1 is a diagram illustrating a structure of a long preamble sequence for an OFDM communication system. It should be noted that a current OFDM communication system uses the same preamble sequence in both a downlink (DL) and an uplink (UL). Referring to FIG. 1, in the long preamble sequence, a length-64 sequence is repeated 4 times and a length-128 sequence is repeated 2 times, and in the light of a characteristic of the OFDM communication system, the above-stated cyclic prefix (CP) is added to a front end of the 4 repeated length-64 sequences and to a front end of the 2 repeated length-128 sequences. In addition, signals obtained before performing IFFT are frequency-domain signals, while signals obtained after performing IFFT are time-domain signals. The long preamble sequence illustrated in FIG. 1 represents a time-domain long preamble sequence obtained after performing IFFT.

Meanwhile, frequency-domain long preamble sequences obtained before IFFT are illustrated below.

$$
\begin{aligned}
S(-100{:}100) = \{ &+1+j,0,0,0,+1+j,0,0,0,+1+j,0,0,0,+1-j,0,0,0,-1+j,0,0,0,+1+j,0,0,0,\\
&+1+j,0,0,0,+1+j,0,0,0,+1-j,0,0,0,-1+j,0,0,0,+1+j,0,0,0,+1+j,0,0,0,\\
&+1+j,0,0,0,+1-j,0,0,0,-1+j,0,0,0,+1-j,0,0,0,+1-j,0,0,0,+1-j,0,0,0,\\
&-1-j,0,0,0,+1+j,0,0,0,-1+j,0,0,0,-1+j,0,0,0,-1+j,0,0,0,+1+j,0,0,0,\\
&-1-j,0,0,0,\\
&0,0,0,0,\\
&-1-j,0,0,0,+1-j,0,0,0,+1+j,0,0,0,-1-j,0,0,0,-1+j,0,0,0,+1-j,0,0,0,\\
&+1+j,0,0,0,-1+j,0,0,0,+1-j,0,0,0,-1-j,0,0,0,+1+j,0,0,0,-1+j,0,0,0,\\
&-1-j,0,0,0,+1+j,0,0,0,+1-j,0,0,0,-1-j,0,0,0,+1-j,0,0,0,+1+j,0,0,0,\\
&-1-j,0,0,0,-1+j,0,0,0,-1+j,0,0,0,-1-j,0,0,0,+1-j,0,0,0,-1+j,0,0,0,\\
&+1+j\}*sqrt(2)*sqrt(2)
\end{aligned}
$$

$$
\begin{aligned}
P(-100{:}100) = \{ &-1,0,+1,0,+1,0,+1,0,+1,0,-1,0,-1,0,+1,0,-1,0,+1,0,\\
&-1,0,-1,0,+1,0,+1,0,-1,0,+1,0,-1,0,+1,0,-1,0,+1,0,\\
&-1,0,+1,0,+1,0,-1,0,+1,0,-1,0,-1,0,+1,0,-1,0,-1,0,\\
&-1,0,+1,0,+1,0,-1,0,+1,0,+1,0,+1,0,-1,0,+1,0,+1,0,\\
&-1,0,-1,0,-1,0,+1,0,+1,0,+1,0,+1,0,+1,0,+1,0,+1,0,\\
&0,0,\\
&-1,0,-1,0,+1,0,-1,0,-1,0,+1,0,+1,0,+1,0,-1,0,+1,0,\\
&+1,0,+1,0,-1,0,-1,0,-1,0,-1,0,-1,0,-1,0,+1,0,-1,0,\\
&-1,0,-1,0,-1,0,-1,0,-1,0,+1,0,+1,0,+1,0,-1,0,+1,0,\\
&-1,0,+1,0,+1,0,-1,0,+1,0,+1,0,+1,0,-1,0,-1,0,-1,0,\\
&-1,0,-1,0,+1,0,-1,0,-1,0,+1,0,-1,0,-1,0,+1,0,-1\}\\
&*sqrt(2)*sqrt(2)
\end{aligned}
$$

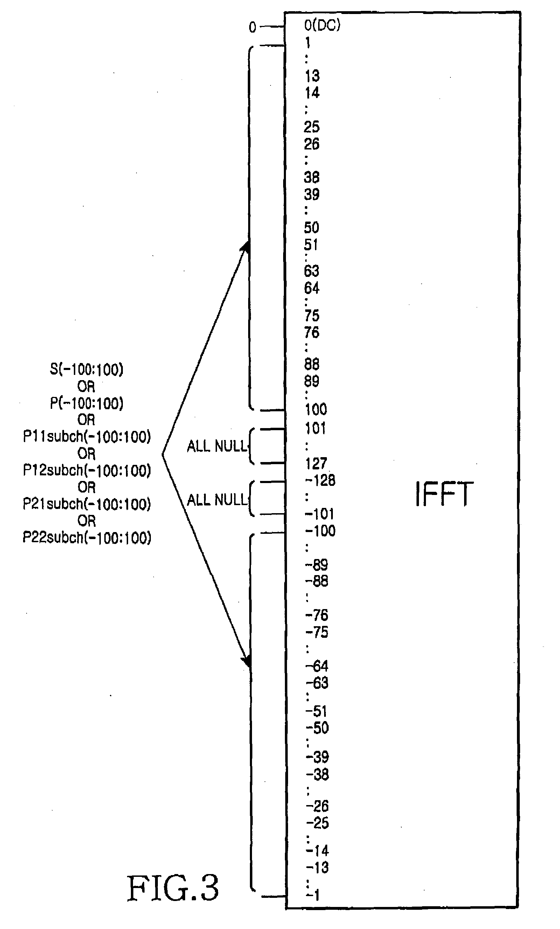

Numerals specified in the frequency-domain long frequency sequences S(-100:100) and P(-100:100) represent subcaniers' positions applied while IFFT is performed, and a detailed description thereof will be made with reference to FIG. 3. S(-100:100) represents a frequency-domain sequence obtained by repeating a 64-length sequence 4 times, and P(-100:100) represents a frequency-domain sequence obtained by repeating a length-128 sequence 2 times. In the expression of S(-100:100) and P(-100:100), 'sqrt(2)' means 'root 2', and 'sqrt(2)*sqrt(2)' means performing double amplification to increase transmission power of S(-100:100) and P(-100:100).

A structure of the long preamble sequence has been described so far with reference to FIG. 1. Next, a structure of a short preamble sequence will be described with reference to FIG. 2.

FIG. 2 is a diagram illustrating a structure of a short preamble sequence for an OFDM communication system. Referring to FIG. 2, in the short preamble sequence, a length-128 sequence is repeated 2 times, and in the light of a characteristic of the OFDM communication system, the above-stated cyclic prefix (CP) is added to a front end of the 2 repeated length-128 sequences. In addition, the short preamble sequence illustrated in FIG. 2 represents a time-domain short preamble sequence obtained after performing IFFT, and a frequency-domain short preamble sequence equals the above-stated P(-100:100).

Meanwhile, the long preamble sequence stated above must be generated taking the following conditions into consideration.

(1) The long preamble sequence should have a low PAPR.

In order to maximize transmission efficiency of a power amplifier (PA) in a transmitter of an OFDM communication system, a PAPR of an OFDM symbol should be low. This is because an IFFT-transformed signal is applied to a power amplifier as described above, and thus, a low PAPR is required due to a non-linear characteristic of the power amplifier. A PAPR of an OFDM symbol should be low in a ratio of maximum power to average power of a time-domain OFDM symbol corresponding to an IFFT output terminal of the transmitter, and for a low ratio of the maximum power to the average power, uniform distribution must be provided. In other words, a PAPR of an output becomes low if symbols having a low cross correlation are combined in an IFFT input terminal of the transmitter, i.e., in a frequency domain.

(2) The long preamble sequence should be suitable for parameter estimation needed for communication initialization.

The parameter estimation includes channel estimation, frequency offset estimation, and time offset estimation.

(3) The long preamble sequence should have low complexity and low overhead.

(4) Coarse frequency offset estimation should be possible.

A function of the long preamble sequence generated considering the foregoing conditions will now be described herein below.

(1) A sequence obtained by repeating a length-64 sequence 4 times is used for time offset estimation and coarse frequency offset estimation.

(2) A sequence obtained by repeating a length-128 sequence 2 times is used for fine frequency offset estimation.

As a result, the long preamble sequence has the following uses in the OFDM communication system.

(1) The long preamble sequence is used as a first preamble sequence of a downlink protocol data unit (hereinafter referred to as "PDU").

(2) The long preamble sequence is used for initial ranging.

(3) The long preamble sequence is used for bandwidth request ranging.

Further, the short preamble sequence has the following uses in the OFDM communication system.

(1) The short preamble sequence is used as an uplink data preamble sequence.

(2) The short preamble sequence is used for periodic ranging.

In the OFDM communication system, since accurate synchronization can be acquired by performing initial ranging and periodic ranging, the uplink data preamble sequence is mainly used for channel estimation. For channel estimation, PAPR, performance and complexity should be taken into consideration. In the case of the existing short preamble sequence, a PAPR is 3.5805[dB], and various channel estimation algorithms such as a minimum mean square error (hereinafter referred to as "MMSE") algorithm and a least square (hereinafter referred to as "LS") algorithm are used.

In addition, the OFDM communication system uses a subchannelization method in order to increase frequency efficiency. The "subchannelization" is a scheme for dividing all of the subcarriers into several subchannels for efficient utilization of a frequency, and each subchannel includes a specified number of subcarriers, the specified number being smaller than the number of all of the subcarriers. For example, if the number of all of the subcarriers for the OFDM communication system is 256 (-128,.... 127), the number of subcarriers actually used is 200 (-100, ... , 100), and they are separated into 4 subchannels. In this case, the following subchannel assignment methods are possible.

    1) all of the subcarriers in use (200 in number): -100,-99,..., -1,1,...,99, 100
    2) guard interval: left (28 in number); -128,...,-101, right (27 in number); 101,...,127
    3) subchannel assignment

        (a) first subchannel assignment method

           (1) subchannel #1: : {-100,..,-89},{-50,...,-39},{1,...13},{51,...,63}
           (2) subchannel #2 : {-88,...,-76},{-38,..., 26},{14,...,25},{64,...,75}
           (3) subchannel #3: {-75,...,-64},{-25,...,-14},{26,...,38},{76,...,88}
           (4) subchannel #4: {-63,...,-51},{-13,...,-1},{39....,50},{89,...,100}

        (b) second subchannel assignment method

           (1) subchannel #1: {-88,...,-76},{-50,...,-39},{1,...,13},{64,...,75}
           (2) subchannel #2: {-63,...,-51},{-25,...,-14},{26,...,38},{89,...,100}
           (3) subchannel #3: {-100,...,-89},{-38,...,-26},{14,...,25},{51,...,63}
           (4) subchannel #4: {-75,...,-64},{-13,...,-1},{39,...,50},(76,...,88}

A mapping relation between subcarriers and a preamble sequence while IFFT is performed in an OFDM communication system will now be described with reference to FIG. 3.

FIG. 3 is a diagram illustrating a mapping relation between subcarriers and a preamble sequence while IFFT is performed in an OFDM communication system. It is assumed in FIG. 3 that if the number of all of the subcarriers for an OFDM communication system is 256, the 256 subcarriers include -128th to 127th subcarriers, and if the number of subcarriers actually in use is 200, the 200 subcarriers include -100th,....,-1st,1st,...,100th subcarriers. In FIG. 3, input numerals at an IFFT's front end represent frequency components, i.e., unique numbers of subcarriers. Here, of the 256 subcarriers, only 200 subcarriers are used. That is, only 200 subcarriers excluding a 0th subcarrier, the -128th to -101st subcarriers, and the 101st to 127th subcarriers from the 256 subcarriers are used. Null data, or 0-data, is inserted in each of the 0th subcarrier, -128th to -101st subcarriers and 101st to 127th subcarriers, before being transmitted, and the reasons are as follows. First, the reason for inserting null data into the 0th subcarrier is because the 0th subcarrier, after performing IFFT, represents a reference point of a preamble sequence in a time domain, i.e., represents a DC (Direct Current) component in a time domain. In addition, the reason for inserting null data into 28 subcarriers of the -128th to -101st subcarriers and 27 subcarriers of the 101st to 127th subcarriers is to provide a guard interval in a frequency domain since the 28 subcarriers of the -128th to -101st subcarriers and the 27 subcarriers of the 101st to 127th subcarriers correspond to a high frequency band in the frequency domain.

As a result, if a frequency-domain preamble sequence of S(-100:100), P(-100:100), P11subch(100:100), P12subch(-100:100), P21subch(-100:100) or P22subch(-100:100) is applied to the IFFT, the frequency-domain preamble sequence S(-100:100), P(-100:100), P11subch(-100:100), P12subch(-100:100), P21subch(-100:100) or P22subcb(-100:100), applied to the IFFT, is mapped to corresponding subcarriers and then IFFT-transformed to thereby output a time-domain preamble sequence. Here, the P11subch(-100:100) represents a frequency-domain preamble sequence in the case where one subchannel is used in a subchannelization process when the first subchannel assignment method is used. The P21subch(-100:100) represents a frequency-domain preamble sequence in the case where one subchannel is used in a subchannelization process when the second subchannel assignment method is used. The P12subch(-100:100) represents a frequency-domain preamble sequence in the case where two subchannels arc used in a subchannelization process when the first subchannel assignment method is used. The P22subch(-100:100) represents a frequency-domain preamble sequence in the case where two subchannels are used in a subchannelization process when the second subchannel assignment method is used.

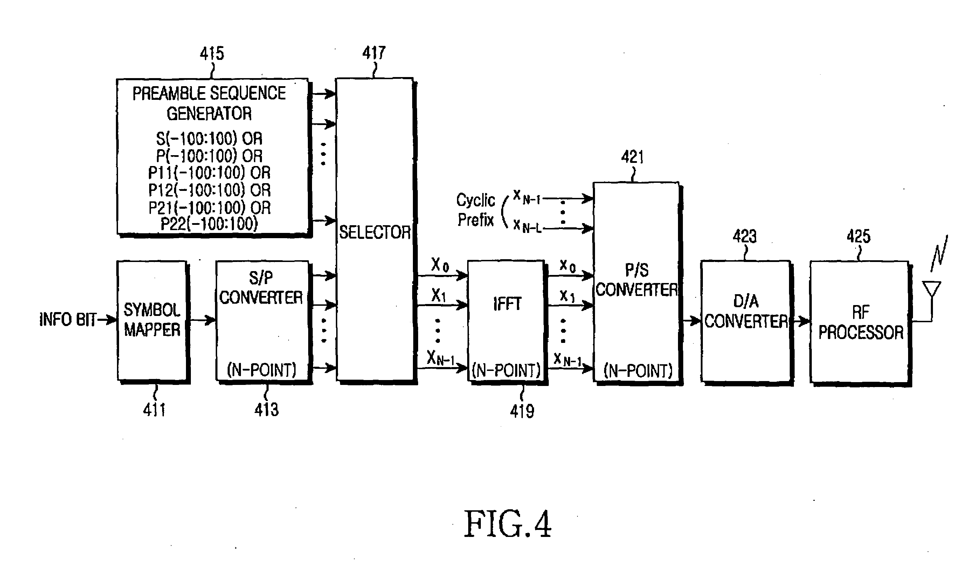

A structure of a transmitter in an OFDM communication system will now be described with reference to FIG. 4.

FIG. 4 is a block diagram illustrating a structure of a transmitter in an OFDM communication system. Referring to FIG. 4, if information bits to be transmitted are generated, the information bits are applied to a symbol mapper 411. The symbol mapper 411 modulates the input information bits by a preset modulation scheme, symbol-maps the modulated bits, and then provides the symbol-mapped bits to a serial-to-parallel (S/P) converter 413. Here, quadrature phase shift keying (QPSK) or 16-ary quadrature amplitude modulation (16QAM) can be used as the modulation scheme.

The serial-to-parallel converter 413 parallel-converts symbols received from the symbol mapper 411 so that the number of the received symbols are matched to an A-point which is the number of inputs of an inverse fast Fourier transformer (hereinafter referred to as "IFFT") 419, and then provides the parallel-converted symbols to a selector 417. A preamble sequence generator 415, under the control of a controller (not shown), generates a corresponding preamble sequence and provides the generated preamble sequence to the selector 417. The selector 417 selects a signal output from the serial-to-parallel converter 413 or a signal output from the preamble sequence generator 415 according to scheduling at a corresponding time, and provides the selected signal to the IFFT 419.

The IFFT 419 performs A-point IFFT on a signal output from the selector 417, and provides its output to a parallel-to-serial (P/S) converter 421. In addition to the signal output from the IFFT 419, a cyclic prefix is applied to the parallel-to-serial converter 421. The parallel-to-serial converter 421 serial-converts the signal output from the IFFT 419 and the cyclic prefix, and provides its output to a digital-to-analog (D/A) converter 423. The digital-to-analog converter 423 analog-converts a signal output from the parallel-to-serial converter 421, and provides the analog-converted signal to a radio frequency (RF) processor 425. The RF processor 425 includes a filter and a front-end unit, and RF-processes a signal output from the digital-to-analog converter 423 so that it can be transmitted over the air, and then transmits the RF signal via an antenna.

Meanwhile, the case where the subchannels are used can be classified into three cases as follows.

(1) Case 1: only one of 4 subchannels is used. At this point, null data is transmitted over the remaining 3 subchannels except the above one subchannel.
(2) Case 2: only two of 4 subchannels are used (subchannel #1 + subchannel #2, or subchannel #3 + subchannel #4). At this point, null data is transmitted over the remaining subchannels except the above two subchannels.
(3) Case 3: all of the 4 subchannels are used (in a general OFDM communication system).

In the case of the existing short preamble sequences used in the subchannelization process, PAPRs of respective subchannels are shown in Table 1 and Table 2 below. Specifically, when subchannels are assigned in the first subchannel assignment method, PAPRs of the respective subchannels are shown in Table 1, and when subchannels are assigned in the second subchannel assignment method, PAPRs of the respective subchannels are shown in Table 2. In a process of calculating PAPRs of the subchannels, the cyclic prefix is not considered.

Table 1

| Subchannel | PAPR[Db] |
|---|---|
| 1 | 4.4092 |
| 2 | 5.8503 |
| 3 | 7.4339 |
| 4 | 6.9715 |
| 1+3 | 5.4292 |
| 2+4 | 5.9841 |
| 1+2+3+4 | 3.5805 |

As shown in Table 1, when subchannels are assigned in the first subchannel assignment method, since PAPR of the subchannels in the short preamble sequence is 7.4339[dB] for the worst case, using the intact existing short preamble sequence in the subchannelization process deteriorates PAPR characteristics, thus failing to satisfy the low PAPR condition which must be considered first of all for the preamble sequence. Therefore, there is a demand for a new short preamble sequence.

Table 2

| Subchannel | PAPR [dB] |
|---|---|
| 1 | 6.5927 |
| 2 | 6.2783 |
| 3 | 6.8485 |
| 4 | 9.0461 |

Table 2   (continued)

| Subchannel | PAPR [dB] |
|---|---|
| 1+2 | 6.7416 |
| 3+4 | 6.6498 |
| 1+2+3+4 | 3.5805 |

In addition, as shown in Table 2, when subchannels are assigned in the second subchannel assignment method, since PAPR of the subchannels in the short preamble sequence is 9.0461 [dB] for the worst case, using the intact existing short preamble sequence in the subchannelization process deteriorates PAPR characteristics, thus failing to satisfy the low PAPR condition which must be considered first of all for the preamble sequence. Therefore, there is a demand for a new short preamble sequence.

## SUMMARY OF THE INVENTION

It is, therefore, an object of the present invention to provide an apparatus and method for generating a preamble sequence in a subchannelization process of an OFDM communication system.

It is another object of the present invention to provide an apparatus and method for generating a short preamble sequence having a minimal PAPR in an OFDM communication system.

To achieve the above and other objects, there is provided an apparatus for generating a preamble sequence in an orthogonal frequency division multiplexing (OFDM) communication system having m subcarriers in a frequency domain. The apparatus includes a preamble sequence generator for generating the preamble sequence so that data of a given preamble sequence is assigned to at least one subchannel selected from p subchannels generated by grouping the m subcarriers by n subcarriers, where n is less than m, and null data is assigned to subchannels not selected from the p subchannels; and an inverse fast Fourier transformer (IFFT) for receiving the preamble sequence, assigning null data to subcarriers except the n subcarriers assigned to the subchannels, and thereafter performing inverse fast Fourier transform for transforming the data into time-domain data.

To achieve the above and other objects, there is provided a method for generating a preamble sequence in an orthogonal frequency division multiplexing (OFDM) communication system having m subcarriers in a frequency domain. The method comprises the steps of: grouping the m subcarriers by n subcarriers where n is less than m, so as to generate p subchannels; and assigning null data to subcarriers except the n subcarriers assigned to the subchannels, assigning data of a given sequence to at least one subchannel selected from the p subchannels, assigning null data to subchannels not selected from the p subchannels, and thereafter performing inverse fast Fourier transform (IFFT) for transforming the data into time-domain data.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a structure of a long preamble sequence for a common OFDM communication system;

FIG. 2 is a diagram illustrating a structure of a short preamble sequence for a common OFDM communication system;

FIG. 3 is a diagram illustrating a mapping relation between subcarriers and a preamble sequence while IFFT is performed in an OFDM communication system;

FIG. 4 is a block diagram illustrating a structure of a transmitter in an OFDM communication system according to an embodiment of the present invention;

FIG. 5 is a diagram illustrating a mapping relation between subcarriers and a preamble sequence when IFFT is performed in an OFDM communication system according to an embodiment of the present invention; and

FIG. 6 is a flowchart illustrating a procedure for mapping a preamble sequence according to an embodiment of the present invention.

## DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness.

The invention proposes an apparatus and method for generating a preamble sequence having a minimum peak-to-average power ratio (hereinafter referred to as "PAPR") in an orthogonal frequency division multiplexing (hereinafter referred to as "OFDM") communication system in which the total number of subcarriers is N and unique numbers of subcarriers actually in use are - B, -B+1,..., -1, 1, ..., B-1, B. Although the number of actual subcarriers is N in the OFDM communication system, since null data, or 0-data, is inserted into a $0^{th}$ subcarrier representing a DC component in a time domain and subcarriers {-N$^{th}$ to (-B-1)$^{th}$ subcarriers and (B+1)$^{th}$ to (N-1)$^{th}$ subcarriers) representing a high frequency band in a frequency domain, i.e., a guard interval in a time domain, as described in the prior art section, the number of subcarriers into which a preamble sequence is actually inserted becomes 2B.

As described in the prior art section, there are two kinds of preamble sequences: a long preamble sequence and a short preamble sequence. In the long preamble sequence, a lengthN/4 sequence is repeated 4 times and a lengthN/2 sequence is repeated 2 times, and in the light of a characteristic of the OFDM communication system, a cyclic prefix (CP) is added to a front end of the 4 repeated lengthN/4 sequences and a front end of the 2 repeated lengthN/2 sequences. Here, N represents the number of points, or inputs, of inverse fast Fourier transform (hereinafter referred to as "IFFT") which will be described below. For example, if it is assumed that the IFFT has 256 points, in the long preamble sequence, a length256/4=64 sequence is repeated 4 times and a length256/2=128 sequence is repeated 2 times. Further, in the short preamble sequence, a lengthN/2 sequence is repeated 2 times, and in the light of a characteristic of the OFDM communication system, the cyclic prefix (CP) is added to a front end of the 2 repeated lengthN/2 sequences.

In addition, the OFDM communication system uses a subchannelization method in order to increase frequency efficiency. For example, if the number of the whole subcarriers for the OFDM communication system is 256 (-128, ..., 127), the number of subcarriers actually used is 200 (-100, ... , 100), and they are separated into 4 subchannels. In this case, the following subchannel assignment methods are possible.

    1) all of the subcarriers in use (200 in number): -100,-99,..., -1,1,...,99, 100
    2) guard interval: left (28 in number); -128,...,-101, right (27 in number); 101,...,127
    3) subchannel assignment

        (a) first subchannel assignment method

            (1) subchannel #1: : {-1,00,..,-89},{-50,...,-39},{1,...13},{51,...,63}
            (2) subchannel #2: {-88,....,-76},{-38,....,-26},{14,....,25},{64,....,75}
            (3) subchannel #3: {-75,....,-64},{-25,....,-14}, {26,...,38},{76,...,88}
            (4) subchannel #4: {-63,...,-51},{-13,....,-1},{39....,50},{89,...,100}

        (b) second subchannel assignment method

            (1) subchannel #1: {-88,....,-76},{-50,....,-39},{1,....,13},{64,....,75}
            (2) subchannel #2: {-63,....,-51},{-25,....,-14},{26,...,38},{89,...,100}
            (3) subchannel #3: {-100,....,-89},{-38,....,-26},{14,...,25},{51,....,63}
            (4) subchannel #4: {-75,....,-64},{-13,....,-1},{39,...,50},{76,...,88}

A description will first be made as to a method of assigning subchannels in the first subchannel assignment method.

First, when only one subchannel is used in a subchannelization process of the OFDM communication system, the invention proposes the followingpreamble sequence mapping rule.

First Preamble Sequence Mapping Rule

    P11subch(-100:100)={

```
    -1  0 +1  0 +1  0 -1  0 -1  0 -1  0          [-100:-89] subch#1
    -1  0 -1  0 -1  0 +1  0 -1  0 +1  0 +1       [- 88:-76] subch#2
     0 -1  0 -1  0 +1  0 -1  0 -1  0 -1          [- 75:-64] subch#3
     0 -1  0 +1  0 +1  0 -1  0 -1  0 -1  0       [- 63:-51] subch#4
    +1  0 +1  0 +1  0 -1  0 +1  0 -1  0          [- 50:-39] subch#1
    -1  0 +1  0 -1  0 -1  0 +1  0 -1  0 -1       [- 38:-26] subch#2
     0 -1  0 +1  0 -1  0 -1  0 +1  0 +1          [- 25:-14] subch#3
     0 +1  0 +1  0 +1  0 -1  0 +1  0 -1  0       [- 13:- 1] subch#4
     0                                           [DC]
     0 +1  0 -1  0 +1  0 +1  0 -1  0 -1  0       [  1: 13] subch#1
    +1  0 -1  0 -1  0 +1  0 +1  0 +1  0          [ 14: 25] subch#2
    -1  0 +1  0 +1  0 +1  0 -1  0 -1  0 -1       [ 26: 38] subch#3
     0 +1  0 -1  0 +1  0 +1  0 -1  0 -1          [ 39: 50] subch#4
     0 -1  0 -1  0 -1  0 -1  0 +1  0 -1  0       [ 51: 63] subch#1
    +1  0 -1  0 +1  0 +1  0 +1  0 -1  0          [ 64: 75] subch#2
    -1  0 +1  0 +1  0 +1  0 +1  0 -1  0 +1       [ 76: 88] subch#3
     0 -1  0 -1  0 -1  0 -1  0 +1  0 -1          [ 89:100] subch#4
}*sqrt(2)*sqrt(2)
```

The first preamble sequence mapping rule shows short preamble sequences considered for all subchannels when only one subchannel is used in an actual subchannelization process in the case where the subchannels are assigned in the first subchannel assignment method. For example, when a subchannel #1 is used, data of +1 or -1 is actually inserted only into -100th to -89th subcarriers, - 50th to -39th subcarriers, 1st to 13th subcarriers and 51st to 63rd subcarriers, and null data is inserted into the other subcarriers. However, according to the first preamble sequence mapping rule, data of +1 or -1, which will be actually inserted when other subchannels are assigned, is inserted even into other subchannels in order to show rules to be mapped to all subchannels.

First, when only a subchannel #1 is used, a preamble sequence P111subch(-100:100) is given by

```
P111subch(-100:100)={
    -1  0 +1  0 +1  0 -1  0 -1  0 -1  0          [-100:-89] subch#1
     0  0  0  0  0  0  0  0  0  0  0  0          [- 88:-76] subch#2
     0  0  0  0  0  0  0  0  0  0  0             [- 75:-64] subch#3
     0  0  0  0  0  0  0  0  0  0  0  0          [- 63:-51] subch#4


    +1  0 +1  0 +1  0 -1  0 +1  0 -1  0          [- 50:-39] subch#1
     0  0  0  0  0  0  0  0  0  0  0  0          [- 38:-26] subch#2
     0  0  0  0  0  0  0  0  0  0  0  0          [- 25:-14] subch#3
     0  0  0  0  0  0  0  0  0  0  0  0          [- 13:- 1] subch#4
     0                                           [DC]
     0 +1  0 -1  0 +1  0 +1  0 -1  0 -1  0       [  1: 13] subch#1
     0  0  0  0  0  0  0  0  0  0  0  0          [ 14: 25] subch#2
     0  0  0  0  0  0  0  0  0  0  0  0          [ 26: 38] subch#3
     0  0  0  0  0  0  0  0  0  0  0             [ 39: 50] subch#4
     0 -1  0 -1  0 -1  0 -1  0 +1  0 -1  0       [ 51: 63] subch#1
     0  0  0  0  0  0  0  0  0  0  0             [ 64: 75] subch#2
     0  0  0  0  0  0  0  0  0  0  0  0          [ 76: 88] subch#3
     0  0  0  0  0  0  0  0  0  0  0  0          [ 89:100] subch#4
}*sqrt(2)*sqrt(2)
```

Second, when only a subchannel #2 is used, a preamble sequence P112subch(-100:100) is given by

```
P112subch(-100:100)={
      0 0 0 0 0 0 0 0 0 0 0 0         [-100:-89] subch#1
     -1 0 -1 0 -1 0 +1 0 -1 0 +1 0 +1  [- 88:-76] subch#2
      0 0 0 0 0 0 0 0 0 0 0 0         [- 75:-64] subch#3
      0 0 0 0 0 0 0 0 0 0 0 0         [- 63:-51] subch#4
      0 0 0 0 0 0 0 0 0 0 0 0         [- 50:-39] subch#1
     -1 0 +1 0 -1 0 -1 0 +1 0 -1 0 -1  [- 38:-26] subch#2
      0 0 0 0 0 0 0 0 0 0 0 0         [- 25:-14] subch#3
      0 0 0 0 0 0 0 0 0 0 0 0         [- 13:- 1] subch#4
      0                               [DC]
      0 0 0 0 0 0 0 0 0 0 0 0         [  1: 13] subch#1
     +1 0 -1 0 -1 0 +1 0 +1 0 +1 0    [ 14: 25] subch#2
      0 0 0 0 0 0 0 0 0 0 0 0         [ 26: 38] subch#3
      0 0 0 0 0 0 0 0 0 0 0 0         [ 39: 50] subch#4
      0 0 0 0 0 0 0 0 0 0 0 0         [ 51: 63] subch#1
     +1 0 -1 0 +1 0 +1 0 +1 0 -1 0    [ 64: 75] subch#2
      0 0 0 0 0 0 0 0 0 0 0 0         [ 76: 88] subch#3
      0 0 0 0 0 0 0 0 0 0 0 0         [ 89:100] subch#4
   }*sqrt(2)*sqrt(2)
```

Third, when only a subchannel #3 is used, a preamble sequence P113subch(-100:100) is given by

```
P113subch(-100:100)={
      0 0 0 0 0 0 0 0 0 0 0 0         [-100:-89] subch#1

      0 0 0 0 0 0 0 0 0 0 0 0         [- 88:-76] subch#2
      0 -1 0 -1 0 +1 0 -1 0 -1 0 -1   [- 75:-64] subch#3
      0 0 0 0 0 0 0 0 0 0 0 0         [- 63:-51] subch#4
      0 0 0 0 0 0 0 0 0 0 0 0         [- 50:-39] subch#1
      0 0 0 0 0 0 0 0 0 0 0 0         [- 38:-26] subch#2
      0 -1 0 +1 0 -1 0 -1 0 +1 0 +1   [- 25:-14] subch#3
      0 0 0 0 0 0 0 0 0 0 0 0         [- 13:- 1] subch#4
      0                               [DC]
      0 0 0 0 0 0 0 0 0 0 0 0         [  1: 13] subch#1
      0 0 0 0 0 0 0 0 0 0 0 0         [ 14: 25] subch#2
     -1 0 +1 0 +1 0 +1 0 -1 0 -1 0 -1  [ 26: 38] subch#3
      0 0 0 0 0 0 0 0 0 0 0 0         [ 39: 50] subch#4
      0 0 0 0 0 0 0 0 0 0 0 0         [ 51: 63] subch#1
      0 0 0 0 0 0 0 0 0 0 0 0         [ 64: 75] subch#2
     -1 0 +1 0 +1 0 +1 0 +1 0 -1 0 +1  [ 76: 88] subch#3
      0 0 0 0 0 0 0 0 0 0 0 0         [ 89:100] subch#4
   }*sqrt(2)*sqrt(2)
```

Fourth, when only a subchannel #4 is used, a preamble sequence P114subch(-100:100)is given by

```
P114subch(-100:100)={
        0 0 0 0 0 0 0 0 0 0 0 0          [-100:-89] subch#1
        0 0 0 0 0 0 0 0 0 0 0 0 0        [- 88:-76] subch#2
        0 0 0 0 0 0 0 0 0 0 0 0 0        [- 75:-64] subch#3
        0 -1 0 +1 0 +1 0 -1 0 -1 0 -1 0  [- 63:-51] subch#4
        0 0 0 0 0 0 0 0 0 0 0            [- 50:-39] subch#1
        0 0 0 0 0 0 0 0 0 0 0 0 0        [- 38:-26] subch#2
        0 0 0 0 0 0 0 0 0 0 0 0 0        [- 25:-14] subch#3
        0 +1 0 +1 0 +1 0 -1 0 +1 0 -1 0  [- 13:- 1] subch#4
        0                               [DC]
        0 0 0 0 0 0 0 0 0 0 0 0 0        [  1: 13] subch#1
        0 0 0 0 0 0 0 0 0 0 0 0          [ 14: 25] subch#2
        0 0 0 0 0 0 0 0 0 0 0 0 0        [ 26: 38] subch#3
        0 +1 0 -1 0 +1 0 +1 0 -1 0 -1    [ 39: 50] subch#4
        0 0 0 0 0 0 0 0 0 0 0 0 0        [ 51: 63] subch#1
        0 0 0 0 0 0 0 0 0 0 0 0          [ 64: 75] subch#2
        0 0 0 0 0 0 0 0 0 0 0 0 0        [ 76: 88] subch#3
        0 -1 0 -1 0 -1 0 -1 0 +1 0 -1    [ 89:100] subch#4
}*sqrt(2)*sqrt(2)
```

Second, when two subchannels are used in a subchannelization process of the OFDM communication system, the invention proposes the following preamble sequence mapping rule.
Second Preamble Sequence Mapping Rule

```
P12subch(-100:100)={
        -1 0 +1 0 +1 0 -1 0 +1 0 -1 0    [-100:-89] subch#1+subch#3
        -1 0 -1 0 +1 0 -1 0 +1 0 -1 0 +1  [- 88:-76] subch#2+subch#4
         0 -1 0 +1 0 +1 0 +1 0 +1 0 +1    [- 75:-64] subch#1+subch#3
         0 -1 0 +1 0 -1 0 +1 0 +1 0 -1 0  [- 63:-51] subch#2+subch#4
        +1 0 +1 0 +1 0 -1 0 -1 0 -1 0    [- 50:-39] subch#1+subch#3
        -1 0 -1 0 +1 0 +1 0 -1 0 +1 0 -1  [- 38:-26] subch#2+subch#4
         0 -1 0 +1 0 -1 0 -1 0 -1 0 -1    [- 25:-14] subch#1+subch#3
         0 -1 0 +1 0 -1 0 +1 0 +1 0 -1 0  [- 13:- 1] subch#2+subch#4
         0                               [DC]
         0 +1 0 +1 0 +1 0 -1 0 +1 0 +1 0  [  1: 13] subch#1+subch#3
        +1 0 +1 0 +1 0 -1 0 +1 0 +1 0    [ 14: 25] subch#2+subch#4
        -1 0 +1 0 +1 0 -1 0 +1 0 +1 0 -1  [ 26: 38] subch#1+subch#3
         0 +1 0 +1 0 -1 0 -1 0 +1 0 +1    [ 39: 50] subch#2+subch#4
         0 +1 0 +1 0 -1 0 +1 0 -1 0 +1 0  [ 51: 63] subch#1+subch#3
        -1 0 -1 0 -1 0 -1 0 +1 0 -1 0    [ 64: 75] subch#2+subch#4
        -1 0 -1 0 -1 0 +1 0 -1 0 -1 0 -1  [ 76: 88] subch#1+subch#3
         0 +1 0 +1 0 +1 0 -1 0 -1 0 -1    [ 89:100] subch#2+subch#4
}*sqrt(2)*sqrt(2)
```

The second preamble sequence mapping rule shows short preamble sequences considered for all subchannels when only two subchannels are used in an actual subchannelization process in the case where the subchannels are assigned in the first subchannel assignment method. For example, when a subchannel #1 and a subchannel #3 are used, data of +1 or -1 is actually inserted only into -100th to -89th subcarriers, -75th to -64th subcarriers, -50th to -39th subcarriers, -25th to -14th subcarriers, 1st to 13th subcarriers, 26th to 38th subcarriers, 51st to 63rd subcarriers and 76th to 88th subcarriers and null data is inserted into the other subcarriers. However, according to the second preamble sequence mapping rule, data of +1 or -1, which will be actually inserted when other subchannels are assigned, is inserted even into other subchannels in order to show rules to be mapped to all subchannels.

A description will now be made of preamble sequences actually used for the subchannels.

First, when a subchannel #1 and a subchannel #3 are used, a preamble sequence P12(1+3)subch(-100:100) is given by

```
P12(1+3)subch(-100:100)={
      -1 0 +1 0 +1 0 -1 0 +1 0 -1 0          [-100:-89] subch#1+subch#3
       0 0 0 0 0 0 0 0 0 0 0 0                [- 88:-76] subch#2+subch#4
       0 -1 0 +1 0 +1 0 +1 0 +1 0 +1         [- 75:-64] subch#1+subch#3
       0 0 0 0 0 0 0 0 0 0 0 0                [- 63:-51] subch#2+subch#4
      +1 0 +1 0 +1 0 -1 0 -1 0 -1 0     ,    [- 50:-39] subch#1+subch#3
       0 0 0 0 0 0 0 0 0 0 0 0                [- 38:-26] subch#2+subch#4
       0 -1 0 +1 0 -1 0 -1 0 -1 0 -1         [- 25:-14] subch#1+subch#3
       0 0 0 0 0 0 0 0 0 0 0 0                [- 13:- 1] subch#2+subch#4
       0                                      [DC]
       0 +1 0 +1 0 +1 0 -1 0 +1 0 +1 0       [  1: 13] subch#1+subch#3
       0 0 0 0 0 0 0 0 0 0 0 0                [ 14: 25] subch#2+subch#4
      -1 0 +1 0 +1 0 -1 0 +1 0 +1 0 -1       [ 26: 38] subch#1+subch#3
       0 0 0 0 0 0 0 0 0 0 0 0                [ 39: 50] subch#2+subch#4
       0 +1 0 +1 0 -1 0 +1 0 -1 0 +1 0       [ 51: 63] subch#1+subch#3
       0 0 0 0 0 0 0 0 0 0 0 0                [ 64: 75] subch#2+subch#4
      -1 0 -1 0 -1 0 +1 0 -1 0 -1 0 -1       [ 76: 88] subch#1+subch#3
       0 0 0 0 0 0 0 0 0 0 0 0                [ 89:100] subch#2+subch#4
}*sqrt(2)*sqrt(2)
```

Second, when a subchannel #2 and a subchannel #4 are used, a preamble sequence P12(2+4)subch(-100: 100) is given by

```
P12(2+4)subch(-100:100)={
       0 0 0 0 0 0 0 0 0 0 0 0                [-100:-89] subch#1+subch#3
      -1 0 -1 0 +1 0 -1 0 +1 0 -1 0 +1       [- 88:-76] subch#2+subch#4
       0 0 0 0 0 0 0 0 0 0 0 0                [- 75:-64] subch#1+subch#3
       0 -1 0 +1 0 -1 0 +1 0 +1 0 -1 0       [- 63:-51] subch#2+subch#4
       0 0 0 0 0 0 0 0 0 0 0 0                [- 50:-39] subch#1+subch#3
      -1 0 -1 0 +1 0 +1 0 -1 0 +1 0 -1       [- 38:-26] subch#2+subch#4
       0 0 0 0 0 0 0 0 0 0 0 0                [- 25:-14] subch#1+subch#3
       0 -1 0 +1 0 -1 0 +1 0 +1 0 -1 0       [- 13:- 1] subch#2+subch#4
       0                                      [DC]
       0 0 0 0 0 0 0 0 0 0 0 0                [  1: 13] subch#1+subch#3
```

```
    +1 0 +1 0 +1 0 -1 0 +1 0 +1 0          [  14: 25]  subch#2+subch#4
     0 0 0 0 0 0 0 0 0 0 0 0 0            [  26: 38]  subch#1+subch#3
     0 +1 0 +1 0 -1 0 -1 0 +1 0 +1        [  39: 50]  subch#2+subch#4
     0 0 0 0 0 0 0 0 0 0 0 0 0            [  51: 63]  subch#1+subch#3
    -1 0 -1 0 -1 0 -1 0 +1 0 -1 0          [  64: 75]  subch#2+subch#4
     0 0 0 0 0 0 0 0 0 0 0 0 0            [  76: 88]  subch#1+subch#3
     0 +1 0 +1 0 +1 0 -1 0 -1 0 -1        [  89:100]  subch#2+subch#4
 }*sqrt(2)*sqrt(2)
```

P111subch(-100:100), P112subch(-100:100), P113subch(-100:100), P114subch(-100:100), P12(1+3)subch(-100:100) and P12(2+4)subch(-100:100) represent short preamble sequences in a frequency domain. In the OFDM communication system, signals obtained before performing inverse fast Fourier transform (hereinafter referred to as "IFPT") are frequency-domain signals, while signals obtained after performing IFFT are time-domain signals.

When all of the 4 subchannels are used in a subchannelization process of the OFDM communication system as done in the conventional OFDM communication system, the conventional short preamble sequence is used as in the prior art systems. Therefore, a detailed description thereof will be omitted.

A description of the invention has been made so far with reference to the case where subchannels are assigned in the first subchannel assignment method. Next, a description of the invention will be made with reference to the case where subchannels are assigned in the second subchannel assignment method.

First, when only one subchannel is used in a subchannelization process of the OFDM communication system, the invention proposes the fowling preamble sequence mapping rule.

Third Preamble Sequence Mapping Rule

```
P21subch(-100:100)={
      -1 0 -1 0 +1 0 +1 0 -1 0 -1 0          [-100:-89]  subch#3

      -1 0 +1 0 +1 0 -1 0 -1 0 -1 0 -1       [- 88:-76]  subch#1
       0 -1 0 -1 0 -1 0 -1 0 +1 0 +1         [- 75:-64]  subch#4
       0 -1 0 +1 0 -1 0 +1 0 -1 0 +1 0       [- 63:-51]  subch#2
      +1 0 -1 0 -1 0 +1 0 -1 0 -1 0          [- 50:-39]  subch#1
      +1 0 +1 0 -1 0 +1 0 +1 0 -1 0 +1       [- 38:-26]  subch#3
       0 -1 0 -1 0 +1 0 +1 0 +1 0 +1         [- 25:-14]  subch#2
       0 +1 0 -1 0 +1 0 -1 0 +1 0 -1 0       [- 13:- 1]  subch#4
       0                                     [DC]
       0 +1 0 -1 0 +1 0 -1 0 +1 0 -1 0       [   1: 13]  subch#1
      -1 0 -1 0 -1 0 -1 0 +1 0 +1 0          [  14: 25]  subch#3
      -1 0 +1 0 -1 0 -1 0 +1 0 -1 0 -1       [  26: 38]  subch#2
       0 +1 0 +1 0 -1 0 +1 0 +1 0 -1         [  39: 50]  subch#4
       0 -1 0 +1 0 -1 0 +1 0 -1 0 +1 0       [  51: 63]  subch#3
      -1 0 -1 0 +1 0 +1 0 +1 0 +1 0          [  64: 75]  subch#1
      +1 0 +1 0 +1 0 +1 0 -1 0 -1 0 +1       [  76: 88]  subch#4
       0 +1 0 +1 0 -1 0 -1 0 +1 0 +1         [  89:100]  subch#2
 }*sqrt(2)*sqrt(2)
```

The third preamble sequence mapping rule shows short preamble sequences considered for all subchannels when only one subchannel is used in an actual subchannelization process in the case where the subchannels arc assigned in the second subchannel assignment method For example, when a subchannel #1 is used, data of +1 or -1 is actually inserted only into -88th to -76th subcarriers, - 50th to -39th subcarriers, 1st to 13th subcarriers and 64th to 75th subcarriers, and null data is inserted into the other subcarriers. However, according to the third preamble sequence mapping rule, data of +1 or -1, which will be actually inserted when other subchannels are assigned, is Inserted even into other subchannels in order to show rules to be mapped to all subchannels.

A description will now be made of preamble sequences actually used for the subchannels.

First, when only a subchannel #1 is used, a preamble sequence P211subch(-100:100) is given by

P211subch(-100:100)={

```
 0  0  0  0  0  0  0  0  0  0  0  0       [-100:-89] subch#3
-1  0 +1  0 +1  0 -1  0 -1  0 -1  0 -1    [- 88:-76] subch#1
 0  0  0  0  0  0  0  0  0  0  0  0        [- 75:-64] subch#4
 0  0  0  0  0  0  0  0  0  0  0  0  0     [- 63:-51] subch#2
+1  0 -1  0 -1  0 +1  0 -1  0 -1  0        [- 50:-39] subch#1
 0  0  0  0  0  0  0  0  0  0  0  0  0     [- 38:-26] subch#3
 0  0  0  0  0  0  0  0  0  0  0  0        [- 25:-14] subch#2
 0  0  0  0  0  0  0  0  0  0  0  0  0     [- 13:- 1] subch#4
 0                                        [DC]
 0 +1  0 -1  0 +1  0 -1  0 +1  0 -1  0     [   1: 13] subch#1
 0  0  0  0  0  0  0  0  0  0  0  0  0     [  14: 25] subch#3
 0  0  0  0  0  0  0  0  0  0  0  0  0  0  [  26: 38] subch#2
 0  0  0  0  0  0  0  0  0  0  0  0  0     [  39: 50] subch#4
 0  0  0  0  0  0  0  0  0  0  0  0  0     [  51: 63] subch#3
-1  0 -1  0 +1  0 +1  0 +1  0 +1  0        [  64: 75] subch#1
 0  0  0  0  0  0  0  0  0  0  0  0  0     [  76: 88] subch#4
 0  0  0  0  0  0  0  0  0  0  0  0        [  89:100] subch#2
}*sqrt(2)*sqrt(2)
```

Second, when only a subchannel #2 is used, a preamble sequence P212subch(-100:104) is given by

P212subch(-100:100)={

```
 0  0  0  0  0  0  0  0  0  0  0  0        [-100:-89] subch#3
 0  0  0  0  0  0  0  0  0  0  0  0  0     [- 88:-76] subch#1
 0  0  0  0  0  0  0  0  0  0  0  0        [- 75:-64] subch#4
 0 -1  0 +1  0 -1  0 +1  0 -1  0 +1  0     [- 63:-51] subch#2
 0  0  0  0  0  0  0  0  0  0  0  0        [- 50:-39] subch#1
 0  0  0  0  0  0  0  0  0  0  0  0  0     [- 38:-26] subch#3
 0 -1  0 -1  0 +1  0 +1  0 +1  0 +1        [- 25:-14] subch#2
 0  0  0  0  0  0  0  0  0  0  0  0  0     [- 13:- 1] subch#4
 0                                        [DC]
 0  0  0  0  0  0  0  0  0  0  0  0  0     [   1: 13] subch#1
 0  0  0  0  0  0  0  0  0  0  0  0        [  14: 25] subch#3
-1  0 +1  0 -1  0 -1  0 +1  0 -1  0 -1     [  26: 38] subch#2
 0  0  0  0  0  0  0  0  0  0  0  0  0     [  39: 50] subch#4
 0  0  0  0  0  0  0  0  0  0  0  0  0     [  51: 63] subch#3
 0  0  0  0  0  0  0  0  0  0  0  0        [  64: 75] subch#1
 0  0  0  0  0  0  0  0  0  0  0  0  0     [  76: 88] subch#4
 0 +1  0 +1  0 -1  0 -1  0 +1  0 +1        [  89:100] subch#2
}*sqrt(2)*sqrt(2)
```

Third, when only a subchannel #3 is used, a preamble sequence P213subch(-100:100) is given by

```
P213subch(-100:100)={
        -1 0 -1 0 +1 0 +1 0 -1 0 -1 0        [-100:-89] subch#3
         0 0 0 0 0 0 0 0 0 0 0 0 0           [- 88:-76] subch#1
         0 0 0 0 0 0 0 0 0 0 0 0 0           [- 75:-64] subch#4
         0 0 0 0 0 0 0 0 0 0 0 0 0           [- 63:-51] subch#2
         0 0 0 0 0 0 0 0 0 0 0 0 0           [- 50:-39] subch#1
        +1 0 +1 0 -1 0 +1 0 +1 0 -1 0 +1     [- 38:-26] subch#3
         0 0 0 0 0 0 0 0 0 0 0 0 0           [- 25:-14] subch#2
         0 0 0 0 0 0 0 0 0 0 0 0 0           [- 13:- 1] subch#4
         0                                   [DC]
         0 0 0 0 0 0 0 0 0 0 0 0 0           [  1: 13] subch#1
        -1 0 -1 0 -1 0 -1 0 +1 0 +1 0        [ 14: 25] subch#3
         0 0 0 0 0 0 0 0 0 0 0 0 0           [ 26: 38] subch#2
         0 0 0 0 0 0 0 0 0 0 0 0 0           [ 39: 50] subch#4
         0 -1 0 +1 0 -1 0 +1 0 -1 0 +1 0     [ 51: 63] subch#3
         0 0 0 0 0 0 0 0 0 0 0 0 0           [ 64: 75] subch#1
         0 0 0 0 0 0 0 0 0 0 0 0 0           [ 76: 88] subch#4
         0 0 0 0 0 0 0 0 0 0 0 0 0           [ 89:100] subch#2
}*sqrt(2)*sqrt(2)
```

Fourth, when only a subchannel #4 is used, a preamble sequence P214subch(-100:100) is given by

```
P214subch(-100:100)={
         0 0 0 0 0 0 0 0 0 0 0 0 0           [-100:-89] subch#3
         0 0 0 0 0 0 0 0 0 0 0 0 0           [- 88:-76] subch#1
         0 -1 0 -1 0 -1 0 -1 0 +1 0 +1       [- 75:-64] subch#4
         0 0 0 0 0 0 0 0 0 0 0 0 0           [- 63:-51] subch#2
         0 0 0 0 0 0 0 0 0 0 0 0 0           [- 50:-39] subch#1
         0 0 0 0 0 0 0 0 0 0 0 0 0           [- 38:-26] subch#3
         0 0 0 0 0 0 0 0 0 0 0 0 0           [- 25:-14] subch#2
         0 +1 0 -1 0 +1 0 -1 0 +1 0 -1 0     [- 13:- 1] subch#4
         0                                   [DC]
         0 0 0 0 0 0 0 0 0 0 0 0 0           [  1: 13] subch#1
         0 0 0 0 0 0 0 0 0 0 0 0 0           [ 14: 25] subch#3
         0 0 0 0 0 0 0 0 0 0 0 0 0           [ 26: 38] subch#2
         0 +1 0 +1 0 -1 0 +1 0 +1 0 -1       [ 39: 50] subch#4
         0 0 0 0 0 0 0 0 0 0 0 0 0           [ 51: 63] subch#3
         0 0 0 0 0 0 0 0 0 0 0 0 0           [ 64: 75] subch#1
        +1 0 +1 0 +1 0 +1 0 -1 0 -1 0 +1     [ 76: 88] subch#4

         0 0 0 0 0 0 0 0 0 0 0 0 0           [ 89:100] subch#2
}*sqrt(2)*sqrt(2)
```

Second, when two subchannels are used in a subchannelization process of the OFDM communication system, the invention proposes the following preamble sequence mapping rule.

Fourth Preamble Sequence Mapping Rule

```
P22subch(-100:100)={
        +1  0 -1  0 +1  0 +1  0 -1  0 +1  0         [-100:-89] subch#3+subch#4
        +1  0 +1  0 +1  0 +1  0 -1  0 -1  0 -1      [- 88:-76] subch#1+subch#2
         0 +1  0 +1  0 +1  0 -1  0 +1  0 +1         [- 75:-64] subch#3+subch#4
         0 +1  0 -1  0 +1  0 +1  0 +1  0 +1  0      [- 63:-51] subch#1+subch#2
        +1  0 -1  0 +1  0 +1  0 -1  0 +1  0         [- 50:-39] subch#3+subch#4
        -1  0 +1  0 -1  0 +1  0 +1  0 +1  0 +1      [- 38:-26] subch#1+subch#2
         0 -1  0 +1  0 -1  0 +1  0 -1  0 +1         [- 25:-14] subch#3+subch#4
         0 -1  0 +1  0 +1  0 -1  0 -1  0 -1  0      [- 13:- 1] subch#1+subch#2
         0                                           [DC]
         0 +1  0 -1  0 -1  0 +1  0 +1  0 +1  0      [   1: 13] subch#1+subch#2
        -1  0 +1  0 -1  0 -1  0 -1  0 +1  0         [  14: 25] subch#3+subch#4
        -1  0 +1  0 +1  0 -1  0 -1  0 +1  0 -1      [  26: 38] subch#1+subch#2
         0 +1  0 +1  0 +1  0 -1  0 -1  0 -1         [  39: 50] subch#3+subch#4
         0 +1  0 -1  0 +1  0 +1  0 +1  0 +1  0      [  51: 63] subch#1+subch#2
        -1  0 +1  0 -1  0 -1  0 -1  0 +1  0         [  64: 75] subch#3+subch#4
        -1  0 -1  0 -1  0 +1  0 +1  0 -1  0 +1      [  76: 88] subch#1+subch#2
         0 +1  0 -1  0 -1  0 +1  0 +1  0 +1         [  89:100] subch#3+subch#4
}*sqrt(2)*sqrt(2)
```

The fourth preamble sequence mapping rule shows short preamble sequences considered for all subchannels when only two subchannels are used in an actual subchannelization process in the case where the subchannels are assigned in the second subchannel assignment method. For example, when a subchannel #3 and a subchannel #4 are used, data of +1 or -1 is actually inserted only into -100th to -89th subcarriers, -75th to -64th subcarriers, -50th to -39th subcarriers, -25th to -14th subcarriers, 14th to 25th subcarriers, 39th to 50th subcarriers, 64th to 75th subcarriers and 89th to 100th subcarriers and null data is inserted into the other subcarriers. However, according to the fourth preamble sequence mapping rule, data of +1 or -1, which will be actually inserted when other subchannels are assigned, is inserted even into other subchannels in order to show rules to be mapped to all subchannels.

A description will now be made of preamble sequences actually used for subchannels.

First, when a subchannel #1 and a subchannel #2 are used, a preamble sequence P22(1+2)subch(-100:100) is given by

```
P22(1+2)subch(-100:100)={
     0  0  0  0  0  0  0  0  0  0  0  0         [-100:-89] subch#3+subch#4
    +1  0 +1  0 +1  0 +1  0 -1  0 -1  0 -1      [- 88:-76] subch#1+subch#2
     0  0  0  0  0  0  0  0  0  0  0  0         [- 75:-64] subch#3+subch#4
     0 +1  0 -1  0 +1  0 +1  0 +1  0 +1  0      [- 63:-51] subch#1+subch#2
     0  0  0  0  0  0  0  0  0  0  0  0         [- 50:-39] subch#3+subch#4
    -1  0 +1  0 -1  0 +1  0 +1  0 +1  0 +1      [- 38:-26] subch#1+subch#2
     0  0  0  0  0  0  0  0  0  0  0  0         [- 25:-14] subch#3+subch#4
     0 -1  0 +1  0 +1  0 -1  0 -1  0 -1  0      [- 13:- 1] subch#1+subch#2
     0                                         [DC]
     0 +1  0 -1  0 -1  0 +1  0 +1  0 +1  0      [  1: 13] subch#1+subch#2
     0  0  0  0  0  0  0  0  0  0  0  0         [ 14: 25] subch#3+subch#4
    -1  0 +1  0 +1  0 -1  0 -1  0 +1  0 -1      [ 26: 38] subch#1+subch#2
     0  0  0  0  0  0  0  0  0  0  0  0         [ 39: 50] subch#3+subch#4
     0 +1  0 -1  0 +1  0 +1  0 +1  0 +1  0      [ 51: 63] subch#1+subch#2
     0  0  0  0  0  0  0  0  0  0  0  0         [ 64: 75] subch#3+subch#4
    -1  0 -1  0 -1  0 +1  0 +1  0 -1  0 +1      [ 76: 88] subch#1+subch#2
     0  0  0  0  0  0  0  0  0  0  0  0         [ 89:100] subch#3+subch#4
}*sqrt(2)*sqrt(2)
```

Second, when a subchannel #3 and a subchannel #4 are used, a preamble sequence P22(3+4)subch(-100:100) is given by

```
P22(3+4)subch(-100:100)={
    +1  0 -1  0 +1  0 +1  0 -1  0 +1  0         [-100:-89] subch#3+subch#4
     0  0  0  0  0  0  0  0  0  0  0  0         [- 88:-76] subch#1+subch#2
     0 +1  0 +1  0 +1  0 -1  0 +1  0 +1         [- 75:-64] subch#3+subch#4
     0  0  0  0  0  0  0  0  0  0  0  0         [- 63:-51] subch#1+subch#2



    +1  0 -1  0 +1  0 +1  0 -1  0 +1  0         [- 50:-39] subch#3+subch#4
     0  0  0  0  0  0  0  0  0  0  0  0         [- 38:-26] subch#1+subch#2
     0 -1  0 +1  0 -1  0 +1  0 -1  0 +1         [- 25:-14] subch#3+subch#4
     0  0  0  0  0  0  0  0  0  0  0  0         [- 13:- 1] subch#1+subch#2
     0                                         [DC]
     0  0  0  0  0  0  0  0  0  0  0  0         [  1: 13] subch#1+subch#2
    -1  0 +1  0 -1  0 -1  0 -1  0 +1  0         [ 14: 25] subch#3+subch#4
     0  0  0  0  0  0  0  0  0  0  0  0         [ 26: 38] subch#1+subch#2
     0 +1  0 +1  0 +1  0 -1  0 -1  0 -1         [ 39: 50] subch#3+subch#4
     0  0  0  0  0  0  0  0  0  0  0  0         [ 51: 63] subch#1+subch#2
    -1  0 +1  0 -1  0 -1  0 -1  0 +1  0         [ 64: 75] subch#3+subch#4
     0  0  0  0  0  0  0  0  0  0  0  0         [ 76: 88] subch#1+subch#2
     0 +1  0 -1  0 -1  0 +1  0 +1  0 +1         [ 89:100] subch#3+subch#4
}*sqrt(2)*sqrt(2)
```

Also, P211subch(-100:100), P212subch(-100:100), P213subch(-100:100), P214subch(-100:100), P22(1+2)subch(-100:100) and P22(3+4)subch(-100:100) represent short preamble sequences in a frequency domain.

Meanwhile, when all of 4 subchannels are used in a subchannelization process of the OFDM communication system as done in the conventional OFDM communication system, the conventional short preamble sequence is used as in the prior art system. Therefore, a detailed description thereof will be omitted.

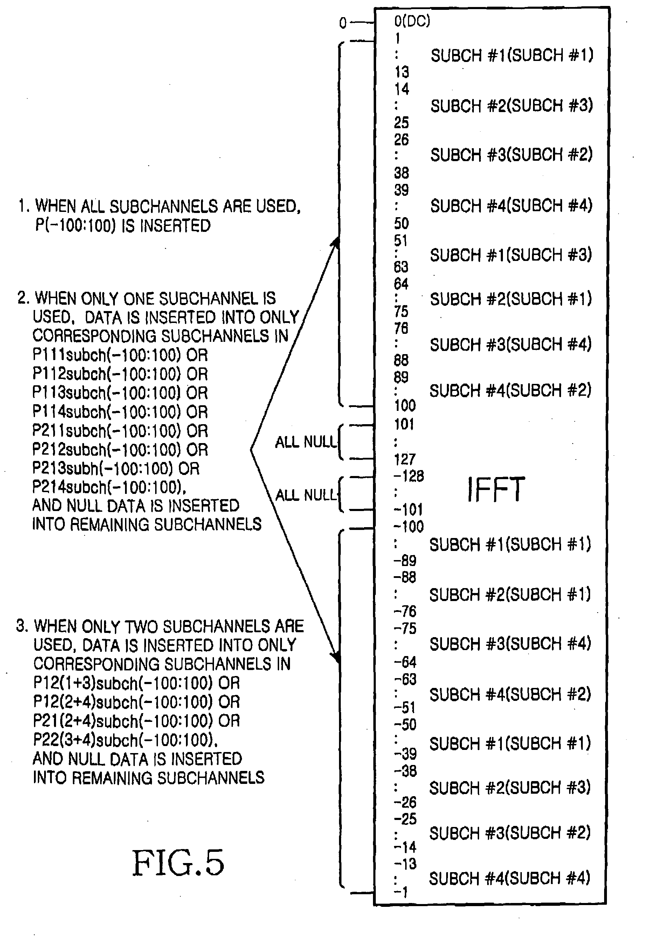

Next, with reference to FIG. 5, a description will be made of a mapping relation between subcarriers and a preamble sequence when IFFT is performed in an OFDM communication system according to an embodiment of the present invention.

FIG. 5 is a diagram illustrating a mapping relation between subcarriers and a preamble sequence when IFFT is performed in an OFDM communication system according to an embodiment of the present invention. It is assumed in FIG. 5 that if the number of all of the subcarriers for an OFDM communication system is 256, the 256 subcarriers include -128th to 127th subcarriers, and if the number of subcarriers actually in use is 200, the 200 subcarriers include - 100th,..., -1st,1st,...,100th subcarriers. In FIG. 5, input numerals at an IFFT's front end represent frequency components, i.e., unique numbers of subcarriers. Here, the reason for inserting null data, or 0-data, into a 0th subcarrier is because the 0th subcarrier, after performing IFFT, represents a reference point of a preamble sequence in a time domain, i.e., represents a DC component in a time domain. Also, null data is inserted into 28 subcarriers of -128th to -101st subcarriers and 27 subcarriers of 101st to 127th subcarriers excluding a 0th subcarrier from 200 subcarriers actually in use. The reason for inserting null data into 28 subcarriers of -128th to -101st subcarriers and 27 subcarriers of 101st to 127th subcarriers is to provide a guard interval in a frequency domain since the 28 subcarriers of the-128th to -101st subcarriers and the 27 subcarriers of 101st to 127th subcarriers correspond to a high frequency band in a frequency domain.

As a result, if a frequency-domain preamble sequence of S(-100:100), P(-100:100), P111subch(-100:100), P112subch(-100:100), P113subch(-100:100), P114subch(-100:100), P12(1+3)subch(-100:100), P12(2+4)subch(-100:100), P211subch(-100:100), P212subch(-100:100), P213subch(-100:100), P214subch(-100:100), P22(1+2)subch(-100:100) or P22(3+4)subch(-100:100) is applied to the IFFT, the IFFT IFFT-transforms an input frequency-domain preamble sequence of S(-100:100), P(-100:100), P111subch(-100:100), P112subch(-100:100), P113subch(-100:100), P114subch(-100:100), P12(1+3)subch(-100:100), P12(2+4)subch(-100:100), P211subch(-100:100), P212subch(-100:100), P213subcb(-100:100), P214subch(-100:100), P22(1+2)subch(-100:100) or P22(3+4)subch(-100:100) after mapping the input frequency-domain preamble sequence to its corresponding subcarriers, thereby outputting a time-domain preamble sequence. That is, if a corresponding frequency-domain preamble sequence is applied to IFFT, then the IFFT IFFT-transforms the input frequency-domain preamble sequence after mapping the input frequency-domain preamble sequence to its corresponding subcarriers.

A description will now be made of a mapping relation between a preamble sequence and subcarriers according to an embodiment of the present invention.

(1) all of the 4 subchannels used

A preamble sequence P(-100:100) is mapped to subcarriers as done in a common OFDM communication system. In a process of mapping the preamble sequence P(-100:100) to subcarriers, null data is inserted into 28 subcarriers of-128th to -101st subcarriers and 27 subcarriers of 101st to 127th subcarriers, which arc guard interval components, and the preamble sequence P(-100:100) is mapped to the remaining 200 subcarriers. However, null data (or 0-data) is inserted into a 0th subcarrier of the P(-100:100) so that a time-domain DC component should be considered.

(2) one subchannel used

When one subchannel is used, a preamble sequence of P111subch(-100:100), P112subch(-100:100), P113subch(-100:100), P114subch(-100:100), P211subch(-100:100), P212subch(-100:100), P213subch(-100: 100), or P214subch{-100:100) is mapped to subcarriers.The preamble sequence is mapped to the subcarriers separately for the case where the subchannel was assigned in the first subchannel assignment method and the case where the subchannel was assigned in the second subchannel assignment method.

A process of mapping the preamble sequence of P111subch(-100:100), P112subch(-100:100), P113subch(-100:100), P114subch(-100:100), P211subch(-100:100), P212subch(-100:100), P213subch(-100:100), or P214subch(-100:100) to subcarriers is identical to that of the common OFDM communication system in a process of inserting null data into 28 subcarriers of -128th to -101st subcarriers and 27 subcarriers of 101st to 127th subcarriers, which are guard interval components. However, when the preamble sequence P1subch(-100:100) is mapped to the remaining 200 subchannels, the first preamble sequence mapping rule or the third preamble sequence mapping rule is applied. However, null data (or 0-data) is inserted into a 0th subcarrier of each of the preamble sequences so that a time-domain DC component should be considered.

For example, when subchannels were assigned in the first subchannel assignment method, if a subchannel #1 among the 4 subchannels is assigned, only the preamble sequence P111subch(-100:100) is mapped to corresponding subcarriers as specified in the first preamble sequence mapping rule and the second preamble sequence mapping rule. That is, -1, 0, 1, 0, 1, 0, -1, 0, -1, 0, -1, 0 are mapped to -100th to -89th subcarriers, respectively; 1, 0, 1, 0, 1, 0, -1, 0, 1, 0, - 1, 0 are mapped to -50th to -39th subcarriers, respectively; 0, 1, 0, -1, 0, 1, 0, 1, 0, - 1, 0, -1, 0 are mapped to 1st to 13th subcarriers, respectively; and 0, -1, 0, -1, 0, -1, 0, -1, 0, 1, 0, -1, 0 are mapped to

51st to 63rd subcarriers, respectively. In addition, null data is inserted into the remaining subcarriers excluding the -100th to -89th subcarriers, -50th to -39th subcarriers, 1st to 13th subcarriers and 51st to 63rd subcarriers.

As another example, when subchannels were assigned in the second subchannel assignment method, if a subchannel #1 among the 4 subchannels is assigned, only the preamble sequence P211subch(-100:100) is mapped to corresponding subcarriers as specified in the third preamble sequence mapping rule. That is, -1 0 1 0 1 0 -1 0 -1 0 -1 0 -1 are mapped to -88th to -76th subcarriers, respectively; 1 0 -1 0 -1 0 1 0 -1 0 -1 0 are mapped to 50th to -39th subcarriers, respectively; 0 1 0 -1 0 1 0 -1 0 1 0 -1 0 are mapped to 1st to 13th subcarriers, respectively; and -1 0 -1 0 1 0 1 0 1 0 1 0 are mapped to 64th to 75th subcarriers, respectively. In addition, null data is inserted into the remaining subcarriers excepting the -88th to -76th subcarriers, -50th to -39th subcarriers, 1st to 13th sub-carriers and 64th to 75th subcarriers.

(3) two subchannels used

When two subchannels are used, a preamble sequence of P12(1+3)subch(-100:100), P12(2+4)subch(-100:1.00), P22(1+2)subch(-100:100) or P22(3+4)subch(-100:100) is mapped to subcarriers. The preamble sequence is mapped to the subcarriers separately for the case where the subchannels were assigned in the first subchannel assignment method and the case where the subchannels were assigned in the second subchannel assignment method.

For example, when subchannels were assigned in the first subchannel assignment method, a process of mapping the preamble sequence of P12(1+3)subch(-100:100), P12(2+4)subch(-100:100), P22(1+2)subch(-100:100) or P22(3+4)subch(-100:100) to subcarriers is identical to that of the common OFDM communication system in a process of inserting null data into 28 subcarriers of -128th to -101st subcarriers and 27 subcarriers of 101st to 127th subcarriers, which are guard interval components. However, null data (or 0-data) is inserted into a 0th subcarrier of each of the preamble sequences so that a time-domain DC component should be considered. However, when the preamble sequence of P12(1+3)subch(=100:100), P12(2+4)subch(-100:100), P22(1+2)subch(-100:100) or P22(3+4)subch(-100:100) is mapped to the remaining 200 subchannels, the second preamble sequence mapping rule or the fourth preamble sequence mapping rule is applied.

For example, when a subchannel #1 and a subchannel #3 among the 4 subchannels are assigned, only the preamble sequence P12(1+3)subcb(-100:100) is mapped to corresponding subcarriers as specified in the second preamble sequence mapping rule. That is, -1, 0, 1, 0, 1, 0, -1, 0,1, 0, -1, 0 are mapped to -100th to -89th subcarriers, respectively; 1, 0, 1, 0, 1, 0, -1, 0, -1, 0, -1, 0 are mapped to -50th to -39th subcarriers, respectively; 0, 1, 0, 1, 0, 1, 0, -1, 0, 1, 0, 1, 0 are mapped to 1st to 13th subcarriers, respectively; and 0; 1, 0, 1, 0, -1, 0, 1, 0, -1, 0, 1, 0 arc mapped to 51st to 63rd subcarriers, respectively. In addition, null data is inserted into the remaining subcarriers excepting the -100th to -89th subcarriers,-50th to -39th subcarriers, 1st to 13th subcarriers, and 51st to 63rd subcarriers.

As another example, when subchannels were assigned in the second subchannel assignment method, if a subchannel #1 and a subchannel #2 among the 4 subchannels are assigned, only the preamble sequence P22(1+2) subch(-100:100) is mapped to corresponding subcarriers as specified in the fourth preamble sequence mapping rule. That is, 1 0 1 0 1 0 1 0 -1 0 -1 0 -1 are mapped to -88th to -76th subcarriers, respectively; 0 1 0 -1 0 1 0 1 0 1 0 1 0 are mapped to - 63rd to -51st subcarriers, respectively; 1 0 -1 0 1 0 1 0 -1 0 1 0 are mapped to-50th to -39th subcarriers, respectively; and 0 -1 0 1 0 -1 0 1 0 -1 0 1 are mapped to -25th to -14th subcarriers, respectively. Further, 0 1 0 -1 0 -1 0 1 0 1 0 1 0 are mapped to 1st to 13th subcarriers, respectively; -1 0 1 0 1 0 -1 0 -1 0 1 0 -1 are mapped to 26th to 38th subcarriers, respectively; -1 0 1 0 -1 0 -1 0 -1 0 1 0 are mapped to 64th to 75th subcarriers, respectively; and 0 1 0 -1 0 -1 0 1 0 1 0 1 are mapped to 89th to 100th subcarriers, respectively. In addition, null data is inserted into the remaining subcarriers excepting the -88th to -76th subcarriers, -63rd to - 51st subcarriers, -50th to -39th subcarriers, -25th to -14th subcarriers, 1st to 13th subcarriers, 26th to 38th subcarriers, 64th to 75th subcarriers, and 89th to 100th subcarriers.

As a result, unlike the conventional technology, the invention maps a preamble sequence to subcarriers by subchannel allocation to decrease a PAPR of the preamble sequence, thereby improving performance of the OFDM communication system.

In the case where a short preamble sequence is used when the first subchannel assignment method is applied, PAPRs of respective subchannels are shown in Table 3, and in the case where a short preamble sequence is used when the second subchannel assignment method is applied, PAPRs of respective subchannels are illustrated in Table 4. In a process of calculating PAPRs of the subchannels, a cyclic prefix is not considered.

Table 3

| Subchannel | PAPR [dB] |
| --- | --- |
| 1 | 2.3 889 |

Table 3   (continued)

| Subchannel | PAPR [dB] |
|---|---|
| 2 | 2.3230 |
| 3 | 2.3230 |
| 4 | 2.3889 |
| 1+3 | 3.0551 |
| 2+4 | 3.0582 |

Table 4

| Subchannel | PAPR [dB] |
|---|---|
| 1 | 3.1335 |
| 2 | 2.922 |
| 3 | 2.922 |
| 4 | 3.1335 |
| 1+2 | 3.1399 |
| 3+4 | 3.1066 |

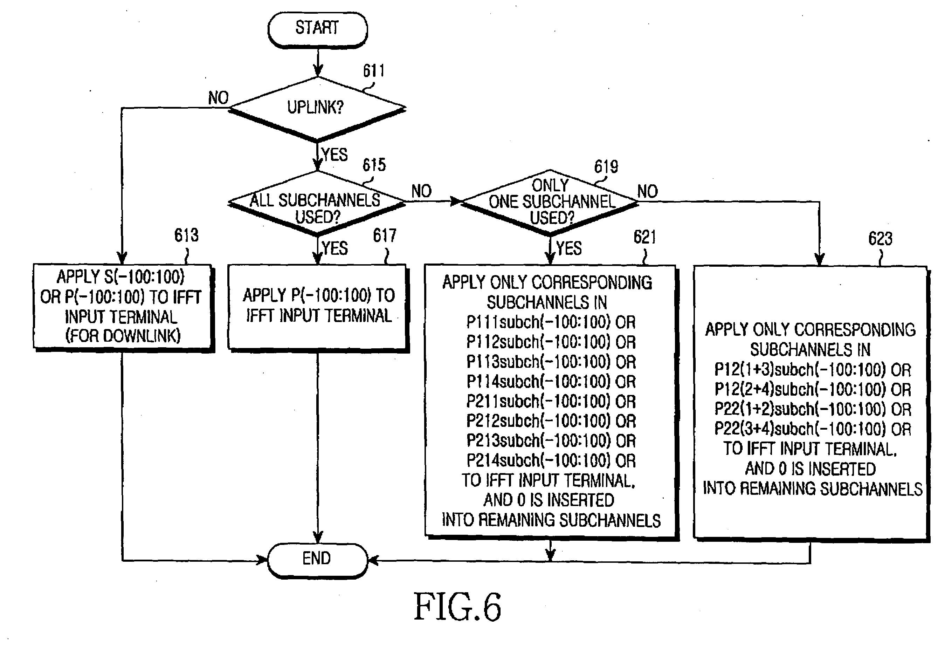

A process of generating a preamble sequence according to the present invention will now be described with reference to FIG. 6.

FIG. 6 is a flowchart illustrating a procedure for mapping a preamble sequence according to an embodiment of the present invention. Referring to FIG. 6, in step 611, a transmitter determines whether a transmission signal is an uplink signal. As a result of the determination, if the transmission signal is not an uplink signal but a downlink signal, the transmitter proceeds to step 613. In step 613, the transmitter applies a corresponding preamble sequence S(-100: 100) or P(-100:100) for the downlink signal to IFFT, maps the corresponding preamble sequence to corresponding subcarriers while IFFT is performed, and then ends the procedure. If it is determined in step 611, that the transmission signal is an uplink signal, the transmitter proceeds to step 615. In step 615, the transmitter determines whether all of the subchannels are assigned during transmission of the uplink signal. As a result of the determination, if all of the subchannels are assigned during uplink signal transmission, the transmitter proceeds to step 617. In step 617, the transmitter maps a preamble sequence P(-100:100) to subcarriers in the same way as done in the common OFDM communication system as described in conjunction with FIG. 5, and then ends the procedure. That is, the transmitter inserts null data into a $0^{th}$ subcarrier which is a time-domain DC component, inserts null data into 28 subcarriers of $-128^{th}$ to $-101^{st}$ subcarriers and 27 subcarriers of $101^{st}$ to $127^{th}$ subcarriers, which are guard interval components, and maps the preamble sequence P(-100:100) to the remaining 200 subcarriers.

However, if it is determined in step 615 that not all of the subchannels are assigned during uplink signal transmission, the transmitter proceeds to step 619. In step 619, the transmitter determines whether only one subchannel is assigned during the uplink signal transmission. As a result of the determination, if only one subchannel is assigned during the uplink signal transmission, the transmitter proceeds to step 621. In step 621, the transmitter inserts null data into a $0^{th}$ subcarrier which is the time-domain DC component, inserts null data into 28 subcarriers of $-128^{th}$ to $-101^{st}$ subcarriers and 27 subcarriers of $101^{st}$ to $127^{th}$ subcarriers, which are guard interval components, and maps the preamble sequence of P111subch(-100:100), P112subch(-100:100), P113subch(-100:100), P114subch(-100:100), P211subch(-100:100), P212subch(-100:100), P213subch(-100:100) or P214subch(-100:100) to the remaining 200 subcarriers according to the first preamble sequence mapping rule or the third preamble sequence mapping rule. Here, since the process of mapping the preamble sequence of P111subch(-100:100), P112subch(-100:100), P113subch(-100:100), P114subch(-100:100), P211subch(-100:100), P212subch(-100:100), P213subch(-100:100) or P214subch(-100:100) according to the first preamble sequence mapping rule or the third preamble sequence mapping rule has been described in conjunction with FIG. 5, a detailed description thereof will be omitted for simplicity.

However, if it is determined in step 619 that not only one subchannel is used, i.e. two subchannels are assigned during the uplink signal transmission, the transmitter proceeds to step 623. In step 623, the transmitter inserts null data into a $0^{th}$ subcarrier which is the time-domain DC component, inserts null data into 28 subcarriers of $-128^{th}$ to $-101^{st}$ subcarriers and 27 subcarriers of $101^{st}$ to $127^{th}$ subcarriers, which are guard interval components, and maps the preamble sequence of P12(1+3)subch(-100:100), P12(2+4)subch(-100:100), P22(1+2)subch(-100:100) or P22(3+4) subch(-100:100) to the remaining 200 subcarriers according to the second preamble sequence mapping rule or the fourth preamble sequence mapping rule. Here, since the process of mapping the preamble sequence of P12(1+3) subch(-100:100), P12(2+4)subch(-100:100), P22(1+2)subch(-100:100) or P22(3+4)subch(-100:100) according to the second preamble sequence mapping rule or the fourth preamble sequence mapping rule has been described in conjunction with FIG. 5, a detailed description thereof will be omitted for simplicity.

As can be appreciated from the foregoing description, the invention proposes a preamble sequence having a minimum PAPR for each of all possible cases where subchannels are assigned in an uplink subchannelization process in an OFDM communication system, thereby improving a characteristic of the preamble sequence. In addition, the invention proposes a different preamble sequence for each of all possible cases where subchannels are assigned in an uplink subchannelization process, to minimize a preamble sequence generation condition, thus making it possible to generate a preamble sequence in a simple method.

While the invention has been shown and described with reference to a certain preferred embodiment thereof, it will be understood by those skilled in the art that various changes in form and details may be made therein without departing from the spirit and scope of the invention as defined by the appended claims.

**Claims**

1.  A method for generating a preamble sequence in an orthogonal frequency division multiplexing (OFDM) communication system having m subcarriers in a frequency domain, comprising the steps of:

    grouping the m subcarriers by n subcarriers, where n is less than m, so as to generate p subchannels; and assigning null data to subcarriers except the n subcarriers assigned to the subchannels, assigning data of a given sequence to at least one subchannel selected from the p subchannels, assigning null data to subchannels not selected from the p subchannels, and thereafter performing inverse fast Fourier transform (IFFT) for transforming the data into time-domain data.

2.  The method of claim 1, wherein if m=256, p=4, the number of the selected subchannels is 1, the selected one subchannel is a subchannel #1 which is a first subchannel among the 4 subchannels, then the given sequence is P111subch(-100:100) given by

```
P111subch(-100:100)={

    -1  0  +1  0  +1  0  -1  0  -1  0  -1  0        [-100:-89] subch#1

     0  0  0  0  0  0  0  0  0  0  0  0             [- 88:-76] subch#2

     0  0  0  0  0  0  0  0  0  0  0  0             [- 75:-64] subch#3

     0  0  0  0  0  0  0  0  0  0  0  0             [- 63:-51] subch#4

    +1  0  +1  0  +1  0  -1  0  +1  0  -1  0        [- 50:-39] subch#1

     0  0  0  0  0  0  0  0  0  0  0  0             [- 38:-26] subch#2

     0  0  0  0  0  0  0  0  0  0  0  0             [- 25:-14] subch#3

     0  0  0  0  0  0  0  0  0  0  0  0             [- 13:- 1] subch#4

     0                                             [DC]
```

```
0 +1 0 -1 0 +1 0 +1 0 -1 0 -1 0        [   1: 13]  subch#1

0 0 0 0 0 0 0 0 0 0 0 0                 [  14: 25]  subch#2

0 0 0 0 0 0 0 0 0 0 0 0                 [  26: 38]  subch#3

0 0 0 0 0 0 0 0 0 0 0 0                 [  39: 50]  subch#4

0 -1 0 -1 0 -1 0 -1 0 +1 0 -1 0        [  51: 63]  subch#1

0 0 0 0 0 0 0 0 0 0 0                   [  64: 75]  subch#2

0 0 0 0 0 0 0 0 0 0 0 0                 [  76: 88]  subch#3

0 0 0 0 0 0 0 0 0 0 0 0                 [  89:100]  subch#4
```

```
}*sqrt(2)*sqrt(2)
```

where $(n_x:n_y)$ represents subcarriers of $n_x{}^{th}$ to $n_y{}^{th}$ subcarriers.

**3.** The method of claim 1, wherein if m=256, p=4, the number of the selected subchannels is 1, the selected one subchannel is a subchannel #1 which is a first subchannel among the 4 subchannels, then the given sequence is P211subch(-100:100) given by

```
P211subch(-100:100)={

    0 0 0 0 0 0 0 0 0 0 0 0            [-100:-89]  subch#3

    -1 0 +1 0 +1 0 -1 0 -1 0 -1 0 -1  [- 88:-76]  subch#1

    0 0 0 0 0 0 0 0 0 0 0 0           [- 75:-64]  subch#4

    0 0 0 0 0 0 0 0 0 0 0 0           [- 63:-51]  subch#2

    +1 0 -1 0 -1 0 +1 0 -1 0 -1 0     [- 50:-39]  subch#1

    0 0 0 0 0 0 0 0 0 0 0 0           [- 38:-26]  subch#3

    0 0 0 0 0 0 0 0 0 0 0 0           [- 25:-14]  subch#2

    0 0 0 0 0 0 0 0 0 0 0 0           [- 13:- 1]  subch#4

    0                                [DC]
```

```
0 +1 0 -1 0 +1 0 -1 0 +1 0 -1 0          [  1: 13] subch#1

0 0 0 0 0 0 0 0 0 0 0 0                   [ 14: 25] subch#3

0 0 0 0 0 0 0 0 0 0 0 0 .                 [ 26: 38] subch#2

0 0 0 0 0 0 0 0 0 0 0 0 .                 [ 39: 50] subch#4

0 0 0 0 0 0 0 0 0 0 0 0 0                 [ 51: 63] subch#3

-1 0 -1 0 +1 0 +1 0 +1 0 +1 0            [ 64: 75] subch#1

0 0 0 0 0 0 0 0 0 0 0 0 0                 [ 76: 88] subch#4

0 0 0 0 0 0 0 0 0 0 0 0                   [ 89:100] subch#2
```

)*sqrt(2)*sqrt(2)

where $(n_x:n_y)$ represents subcarriers of $n_x^{th}$ to $n_y^{th}$ subcarriers.

4. The method of claim 1, wherein if m=256, p=4, the number of the selected subchannels is 1, the selected one subchannel is a subchannel #2 which is a second subchannel among the 4 subchannels, then the given sequence is P112subch(-100:100) given by

```
P112subch(-100:100)={

0 0 0 0 0 0 0 0 0 0 0 0                   [-100:-89] subch#1

-1 0 -1 0 -1 0 +1 0 -1 0 +1 0 +1         [- 88:-76] subch#2

0 0 0 0 0 0 0 0 0 0 0 0                   [- 75:-64] subch#3

0 0 0 0 0 0 0 0 0 0 0 0                   [- 63:-51] subch#4

0 0 0 0 0 0 0 0 0 0 0 0                   [- 50:-39] subch#1

-1 0 +1 0 -1 0 -1 0 +1 0 -1 0 -1         [- 38:-26] subch#2

0 0 0 0 0 0 0 0 0 0 0 0                   [- 25:-14] subch#3

0 0 0 0 0 0 0 0 0 0 0 0                   [- 13:- 1] subch#4

0                                        [DC]
```

```
0 0 0 0 0 0 0 0 0 0 0 0 0          [  1: 13] subch#1

+1 0 -1 0 -1 0 +1 0 +1 0 +1 0      [ 14: 25] subch#2

0 0 0 0 0 0 0 0 0 0 0 0 0          [ 26: 38] subch#3

0 0 0 0 0 0 0 0 0 0 0 0            [ 39: 50] subch#4

0 0 0 0 0 0 0 0 0 0 0 0 0          [ 51: 63] subch#1

+1 0 -1 0 +1 0 +1 0 +1 0 -1 0      [ 64: 75] subch#2

0 0 0 0 0 0 0 0 0 0 0 0 0          [ 76: 88] subch#3

0 0 0 0 0 0 0 0 0 0 0 0            [ 89:100] subch#4

}*sqrt(2)*sqrt(2)
```

where $(n_x:n_y)$ represents subcarriers of $n_x{}^{th}$ to $n_y{}^{th}$ subcarriers.

5. The method of claim 1, wherein if m=256, p=4, the number of the selected subchannels is 1, the selected one subchannel is a subchannel #2 which is a second subchannel among the 4 subchannels, then the given sequence is P212subch(-100:100) given by

```
P212subch(-100:100)={

        0 0 0 0 0 0 0 0 0 0 0 0        [-100:-89] subch#3

        0 0 0 0 0 0 0 0 0 0 0 0 0      [- 88:-76] subch#1

        0 0 0 0 0 0 0 0 0 0 0 0        [- 75:-64] subch#4

        0 -1 0 +1 0 -1 0 +1 0 -1 0 +1 0  [- 63:-51] subch#2

        0 0 0 0 0 0 0 0 0 0 0 0        [- 50:-39] subch#1

        0 0 0 0 0 0 0 0 0 0 0 0 0      [- 38:-26] subch#3

        0 -1 0 -1 0 +1 0 +1 0 +1 0 +1  [- 25:-14] subch#2

        0 0 0 0 0 0 0 0 0 0 0 0 0      [- 13:- 1] subch#4

        0                             [DC]

        0 0 0 0 0 0 0 0 0 0 0 0 0      [  1: 13] subch#1
```

```
0 0 0 0 0 0 0 0 0 0 0 0              [ 14: 25] subch#3

-1 0 +1 0 -1 0 -1 0 +1 0 -1 0 -1     [ 26: 38] subch#2

0 0 0 0 0 0 0 0 0 0 0 0              [ 39: 50] subch#4

0 0 0 0 0 0 0 0 0 0 0 0 0            [ 51: 63] subch#3

0 0 0 0 0 0 0 0 0 0 0 0              [ 64: 75] subch#1

0 0 0 0 0 0 0 0 0 0 0 0 0            [ 76: 88] subch#4

0 +1 0 +1 0 -1 0 -1 0 +1 0 +1        [ 89:100] subch#2

}*sqrt(2)*sqrt(2)
```

where $(n_x:n_y)$ represents subcarriers of $n_x^{th}$ to $n_y^{th}$ subcarriers.

6. The method of claim 1, wherein if m=256, p=4, the number of the selected subchannels is 1, the selected one subchannel is a subchannel #3 which is a third subchannel among the 4 subchannels, then the given sequence is P113subch(-100:100) given by

```
P113subch(-100:100)={

0 0 0 0 0 0 0 0 0 0 0 0            [-100:-89] subch#1

0 0 0 0 0 0 0 0 0 0 0 0 0          [- 88:-76] subch#2

0 -1 0 -1 0 +1 0 -1 0 -1 0 -1      [- 75:-64] subch#3

0 0 0 0 0 0 0 0 0 0 0 0 0          [- 63:-51] subch#4

0 0 0 0 0 0 0 0 0 0 0 0            [- 50:-39] subch#1

0 0 0 0 0 0 0 0 0 0 0 0 0          [- 38:-26] subch#2

0 -1 0 +1 0 -1 0 -1 0 +1 0 +1      [- 25:-14] subch#3

0 0 0 0 0 0 0 0 0 0 0 0 0          [- 13:- 1] subch#4

0                                 [DC]

0 0 0 0 0 0 0 0 0 0 0 0 0          [  1: 13] subch#1

0 0 0 0 0 0 0 0 0 0 0 0            [ 14: 25] subch#2
```

```
        -1 0 +1 0 +1 0 +1 0 -1 0 -1 0 -1        [ 26: 38]  subch#3

         0 0 0 0 0 0 0 0 0 0 0 0                 [ 39: 50]  subch#4

         0 0 0 0 0 0 0 0 0 0 0 0                 [ 51: 63]  subch#1

         0 0 0 0 0 0 0 0 0 0 0 0                 [ 64: 75]  subch#2

        -1 0 +1 0 +1 0 +1 0 +1 0 -1 0 +1        [ 76: 88]  subch#3

         0 0 0 0 0 0 0 0 0 0 0 0                 [ 89:100]  subch#4
```

```
}*sqrt(2)*sqrt(2)
```

where $(n_x:n_y)$ represents subcarriers of $n_x^{th}$ to $n_y^{th}$ subcarriers.

7. The method of claim 1, wherein if m=256, p=4, the number of the selected subchannels is 1, the selected one subchannel is a subchannel #3 which is a third subchannel among the 4 subchannels, then the given sequence is P213subch(-100:100) given by

```
P213subch(-100:100)={
```

```
        -1 0 -1 0 +1 0 +1 0 -1 0 -1 0           [-100:-89]  subch#3

         0 0 0 0 0 0 0 0 0 0 0 0                 [- 88:-76]  subch#1

         0 0 0 0 0 0 0 0 0 0 0 0                 [- 75:-64]  subch#4

         0 0 0 0 0 0 0 0 0 0 0 0                 [- 63:-51]  subch#2

         0 0 0 0 0 0 0 0 0 0 0 0                 [- 50:-39]  subch#1

        +1 0 +1 0 -1 0 +1 0 +1 0 -1 0 +1        [- 38:-26]  subch#3

         0 0 0 0 0 0 0 0 0 0 0 0                 [- 25:-14]  subch#2

         0 0 0 0 0 0 0 0 0 0 0 0                 [- 13:- 1]  subch#4

         0                                       [DC]

         0 0 0 0 0 0 0 0 0 0 0 0                 [   1: 13]  subch#1

        -1 0 -1 0 -1 0 -1 0 +1 0 +1 0           [  14: 25]  subch#3

         0 0 0 0 0 0 0 0 0 0 0 0                 [  26: 38]  subch#2
```

```
    0 0 0 0 0 0 0 0 0 0 0 0        [ 39: 50] subch#4

    0 -1 0 +1 0 -1 0 +1 0 -1 0 +1 0    [ 51: 63] subch#3

    0 0 0 0 0 0 0 0 0 0 0 0        [ 64: 75] subch#1

    0 0 0 0 0 0 0 0 0 0 0 0        [ 76: 88] subch#4

    0 0 0 0 0 0 0 0 0 0 0 0        [ 89:100] subch#2

}*sqrt(2)*sqrt(2)
```

where ($n_x$:$n_y$) represents subcarriers of $n_x^{th}$ to $n_y^{th}$ subcarriers.

8. The method of claim 1, wherein if m=256, p=4, the number of the selected subcbannels is 1, the selected one subchannel is a subchannel #4 which is a fourth subchannel among the 4 subchannels, then the given sequence is P114subch(-100:100) given by

```
P114subch(-100:100)={

    0 0 0 0 0 0 0 0 0 0 0 0        [-100:-89] subch#1

    0 0 0 0 0 0 0 0 0 0 0 0        [- 88:-76] subch#2

    0 0 0 0 0 0 0 0 0 0 0 0        [- 75:-64] subch#3

    0 -1 0 +1 0 +1 0 -1 0 -1 0 -1 0    [- 63:-51] subch#4

    0 0 0 0 0 0 0 0 0 0 0         [- 50:-39] subch#1

    0 0 0 0 0 0 0 0 0 0 0 0 0      [- 38:-26] subch#2

    0 0 0 0 0 0 0 0 0 0 0 0       [- 25:-14] subch#3

    0 +1 0 +1 0 +1 0 -1 0 +1 0 -1 0    [- 13:- 1] subch#4

    0                [DC]

    0 0 0 0 0 0 0 0 0 0 0 0        [  1: 13] subch#1

    0 0 0 0 0 0 0 0 0 0 0        [ 14: 25] subch#2

    0 0 0 0 0 0 0 0 0 0 0 0        [ 26: 38] subch#3

    0 +1 0 -1 0 +1 0 +1 0 -1 0 -1      [ 39: 50] subch#4
```

```
0 0 0 0 0 0 0 0 0 0 0 0 0        [ 51: 63] subch#1

0 0 0 0 0 0 0 0 0 0 0 0          [ 64: 75] subch#2

0 0 0 0 0 0 0 0 0 0 0 0 0        [ 76: 88] subch#3

0 -1 0 -1 0 -1 0 -1 0 +1 0 -1   [ 89:100] subch#4

}*sqrt(2)*sqrt(2)
```

where $(n_x:n_y)$ represents subcarriers of $n_x$th to $n_y$th subcarriers.

9.  The method of claim 1, wherein if m=256, p=4, the number of the selected subchannels is 1, the selected one subchannel is a subchannel #4 which is a fourth subchannel among the 4 subchannels, then the given sequence is P214subch(-100:100) given by

```
P214subch(-100:100)={

    0 0 0 0 0 0 0 0 0 0 0 0 0        [-100:-89] subch#3

    0 0 0 0 0 0 0 0 0 0 0 0          [- 88:-76] subch#1

    0 -1 0 -1 0 -1 0 -1 0 +1 0 +1   [- 75:-64] subch#4

    0 0 0 0 0 0 0 0 0 0 0 0          [- 63:-51] subch#2

    0 0 0 0 0 0 0 0 0 0 0 0 0        [- 50:-39] subch#1

    0 0 0 0 0 0 0 0 0 0 0 0 0        [- 38:-26] subch#3

    0 0 0 0 0 0 0 0 0 0 0 0          [- 25:-14] subch#2

    0 +1 0 -1 0 +1 0 -1 0 +1 0 -1 0 [- 13:- 1] subch#4

    0                                [DC]

    0 0 0 0 0 0 0 0 0 0 0 0 0        [  1: 13] subch#1

    0 0 0 0 0 0 0 0 0 0 0 0 0        [ 14: 25] subch#3

    0 0 0 0 0 0 0 0 0 0 0 0          [ 26: 38] subch#2

    0 +1 0 +1 0 -1 0 +1 0 +1 0 -1   [ 39: 50] subch#4

    0 0 0 0 0 0 0 0 0 0 0 0 0        [ 51: 63] subch#3
```

```
0 0 0 0 0 0 0 0 0 0 0 0 0          [ 64: 75] subch#1

+1 0 +1 0 +1 0 +1 0 -1 0 -1 0 +1   [ 76: 88] subch#4

0 0 0 0 0 0 0 0 0 0 0 0 0          [ 89:100] subch#2
```

```
}*sqrt(2)*sqrt(2)
```

where $(n_x:n_y)$ represents subcarriers of $n_x^{th}$ to $n_y^{th}$ subcarriers:

10. The method of claim 1, wherein if m=256, p=4, the number of the selected subchannels is 2, the selected two subchannel are a subchannel #1 which is a first subchannel and a subchannel #3 which is a third subchannel among the 4 subchannels, then the given sequence is P12(1+3)subch(-100:100) given by

```
P12(1+3)subch(-100:100)={

   -1 0 +1 0 +1 0 -1 0 +1 0 -1 0     [-100:-89] subch#1+subch#3

   0 0 0 0 0 0 0 0 0 0 0 0 0         [- 88:-76] subch#2+subch#4

   0 -1 0 +1 0 +1 0 +1 0 +1 0 +1     [- 75:-64] subch#1+subch#3

   0 0 0 0 0 0 0 0 0 0 0 0 0         [- 63:-51] subch#2+subch#4

   +1 0 +1 0 +1 0 -1 0 -1 0 -1 0     [- 50:-39] subch#1+subch#3

   0 0 0 0 0 0 0 0 0 0 0 0 0         [- 38:-26] subch#2+subch#4

   0 -1 0 +1 0 -1 0 -1 0 -1 0 -1     [- 25:-14] subch#1+subch#3

   0 0 0 0 0 0 0 0 0 0 0 0 0         [- 13:- 1] subch#2+subch#4

   0                                 [DC]

   0 +1 0 +1 0 +1 0 -1 0 +1 0 +1 0   [   1: 13] subch#1+subch#3

   0 0 0 0 0 0 0 0 0 0 0 0           [  14: 25] subch#2+subch#4

   -1 0 +1 0 +1 0 -1 0 +1 0 +1 0 -1  [  26: 38] subch#1+subch#3

   0 0 0 0 0 0 0 0 0 0 0 0           [  39: 50] subch#2+subch#4

   0 +1 0 +1 0 -1 0 +1 0 -1 0 +1 0   [  51: 63] subch#1+subch#3


   0 0 0 0 0 0 0 0 0 0 0 0           [  64: 75] subch#2+subch#4

   -1 0 -1 0 -1 0 +1 0 -1 0 -1 0 -1  [  76: 88] subch#1+subch#3

   0 0 0 0 0 0 0 0 0 0 0            [  89:100] subch#2+subch#4
```

```
}*sqrt(2)*sqrt(2)
```

where $(n_x:n_y)$ represents subcarriers of $n_x^{th}$ to $n_y^{th}$ subcarriers.

11. The method of claim 1, wherein if m=256, p=4, the number of the selected subchannels is 2, the selected two subchannel are a subchannel #1 which is a first subchannel and a subchannel #2 which is a second subchannel among the 4 subchannels, then the given sequence is P22(1+2)subch(-100:100) given by

```
P22(1+2)subch(-100:100)={

    0  0  0  0  0  0  0  0  0  0  0         [-100:-89]  subch#3+subch#4

   +1  0 +1  0 +1  0 +1  0 -1  0 -1  0 -1   [- 88:-76]  subch#1+subch#2

    0  0  0  0  0  0  0  0  0  0  0         [- 75:-64]  subch#3+subch#4

    0 +1  0 -1  0 +1  0 +1  0 +1  0 +1  0   [- 63:-51]  subch#1+subch#2

    0  0  0  0  0  0  0  0  0  0  0         [- 50:-39]  subch#3+subch#4

   -1  0 +1  0 -1  0 +1  0 +1  0 +1  0 +1   [- 38:-26]  subch#1+subch#2

    0  0  0  0  0  0  0  0  0  0  0         [- 25:-14]  subch#3+subch#4

    0 -1  0 +1  0 +1  0 -1  0 -1  0 -1  0   [- 13:- 1]  subch#1+subch#2

    0                                        [DC]

    0 +1  0 -1  0 -1  0 +1  0 +1  0 +1  0   [   1: 13]  subch#1+subch#2

    0  0  0  0  0  0  0  0  0  0  0         [  14: 25]  subch#3+subch#4

   -1  0 +1  0 +1  0 -1  0 -1  0 +1  0 -1   [  26: 38]  subch#1+subch#2

    0  0  0  0  0  0  0  0  0  0  0         [  39: 50]  subch#3+subch#4

    0 +1  0 -1  0 +1  0 +1  0 +1  0 +1  0   [  51: 63]  subch#1+subch#2


    0  0  0  0  0  0  0  0  0  0  0         [  64: 75]  subch#3+subch#4

   -1  0 -1  0 -1  0 +1  0 +1  0 -1  0 +1   [  76: 88]  subch#1+subch#2

    0  0  0  0  0  0  0  0  0  0  0         [  89:100]  subch#3+subch#4

    }*sqrt(2)*sqrt(2)
```

where $(n_x:n_y)$ represents subcarriers of $n_x{}^{th}$ to $n_y{}^{th}$ subcarriers.

12. The method of claim 1, wherein if m= 256, p=4, the number of the selected subchannels is 2, the selected two subchannel are a subchannel #2 which is a second subchannel and a subchannel #4 which is a fourth subchannel among the 4 subchannels, then the given sequence is P12(2+4)suhch(-100:100) given by

```
P12(2+4)subch(-100:100)={
```

| | |
|---|---|
| 0 0 0 0 0 0 0 0 0 0 0 0 | [-100:-89] subch#1+subch#3 |
| -1 0 -1 0 +1 0 -1 0 +1 0 -1 0 +1 | [- 88:-76] subch#2+subch#4 |
| 0 0 0 0 0 0 0 0 0 0 0 0 | [- 75:-64] subch#1+subch#3 |
| 0 -1 0 +1 0 -1 0 +1 0 +1 0 -1 0 | [- 63:-51] subch#2+subch#4 |
| 0 0 0 0 0 0 0 0 0 0 0 0 | [- 50:-39] subch#1+subch#3 |
| -1 0 -1 0 +1 0 +1 0 -1 0 +1 0 -1 | [- 38:-26] subch#2+subch#4 |
| 0 0 0 0 0 0 0 0 0 0 0 0 | [- 25:-14] subch#1+subch#3 |
| 0 -1 0 +1 0 -1 0 +1 0 +1 0 -1 0 | [- 13:- 1] subch#2+subch#4 |
| 0 | [DC] |
| 0 0 0 0 0 0 0 0 0 0 0 0 | [ 1: 13] subch#1+subch#3 |
| +1 0 +1 0 +1 0 -1 0 +1 0 +1 0 | [ 14: 25] subch#2+subch#4 |
| 0 0 0 0 0 0 0 0 0 0 0 0 | [ 26: 38] subch#1+subch#3 |
| 0 +1 0 +1 0 -1 0 -1 0 +1 0 +1 | [ 39: 50] subch#2+subch#4 |
| 0 0 0 0 0 0 0 0 0 0 0 0 | [ 51: 63] subch#1+subch#3 |
| -1 0 -1 0 -1 0 -1 0 +1 0 -1 0 | [ 64: 75] subch#2+subch#4 |
| 0 0 0 0 0 0 0 0 0 0 0 0 | [ 76: 88] subch#1+subch#3 |
| 0 +1 0 +1 0 +1 0 -1 0 -1 0 -1 | [ 89:100] subch#2+subch#4 |

```
}*sqrt(2)*sqrt(2)
```

where $(n_x:n_y)$ represents subcarriers of $n_x^{th}$ to $n_y^{th}$ subcarriers.

**13.** The method of claim 1, wherein if m=256, p=4, the number of the selected subchannels is 2, the selected two subchannel are a subchannel #3 which is a third subchannel and a subchannel #4 which is a fourth subchannel among the 4 subchannels, then the given sequence is P22(3+4)subch(-100:100) given by

```
P22(3+4)subch(-100:100)={

        +1  0  -1  0  +1  0  +1  0  -1  0  +1  0         [-100:-89]  subch#3+subch#4

         0  0  0  0  0  0  0  0  0  0  0  0              [- 88:-76]  subch#1+subch#2

         0  +1  0  +1  0  +1  0  -1  0  +1  0  +1        [- 75:-64]  subch#3+subch#4

         0  0  0  0  0  0  0  0  0  0  0  0              [- 63:-51]  subch#1+subch#2

        +1  0  -1  0  +1  0  +1  0  -1  0  +1  0         [- 50:-39]  subch#3+subch#4

         0  0  0  0  0  0  0  0  0  0  0  0              [- 38:-26]  subch#1+subch#2

         0  -1  0  +1  0  -1  0  +1  0  -1  0  +1        [- 25:-14]  subch#3+subch#4

         0  0  0  0  0  0  0  0  0  0  0  0              [- 13:- 1]  subch#1+subch#2

         0                                              [DC]

         0  0  0  0  0  0  0  0  0  0  0  0              [   1: 13]  subch#1+subch#2

        -1  0  +1  0  -1  0  -1  0  -1  0  +1  0         [  14: 25]  subch#3+subch#4

         0  0  0  0  0  0  0  0  0  0  0  0              [  26: 38]  subch#1+subch#2

         0  +1  0  +1  0  +1  0  -1  0  -1  0  -1        [  39: 50]  subch#3+subch#4

         0  0  0  0  0  0  0  0  0  0  0  0              [  51: 63]  subch#1+subch#2


        -1  0  +1  0  -1  0  -1  0  -1  0  +1  0         [  64: 75]  subch#3+subch#4

         0  0  0  0  0  0  0  0  0  0  0  0              [  76: 88]  subch#1+subch#2

         0  +1  0  -1  0  -1  0  +1  0  +1  0  +1        [  89:100]  subch#3+subch#4

}*sqrt(2)*sqrt(2)
```

where $(n_x : n_y)$ represents subcarriers of $n_x^{th}$ to $n_y^{th}$ subcarriers.

14. The method of claim 1, wherein all of the subcarriers except the n subcarriers assigned to the subchannels are subcarriers corresponding to an interference-removed component between a DC component and the subcarriers.

15. An apparatus for generating a preamble sequence in an orthogonal frequency division multiplexing (OFDM) communication system having m subcarriers in a frequency domain, comprising:

a preamble sequence generator for generating the preamble sequence so that data of a given preamble sequence is assigned to at least one subchannel selected from p subchannels generated by grouping the m subcarriers by n subcarriers, where n is less than m, and null data is assigned to subchannels not selected from the p subchannels; and
an inverse fast Fourier transformer (IFFT) for receiving the preamble sequence, assigning null data to subcarriers except the n subcarriers assigned to the subchannels, and thereafter performing inverse fast Fourier transform for transforming the data into time-domain data.

**16.** The apparatus of claim 15, wherein if m=256, p=4, the number of the selected subchannels is 1, the selected one subchannel is a subchannel #1 which is a first subchannel among the 4 subchannels, then the given sequence is P111subch(-100:100) given by

P111subch(-100:100)={

```
-1 0 +1 0 +1 0 -1 0 -1 0 -1 0              [-100:-89] subch#1

         0 0 0 0 0 0 0 0 0 0 0 0 0         [- 88:-76] subch#2

         0 0 0 0 0 0 0 0 0 0 0 0           [- 75:-64] subch#3

         0 0 0 0 0 0 0 0 0 0 0 0 0         [- 63:-51] subch#4

       +1 0 +1 0 +1 0 -1 0 +1 0 -1 0      [- 50:-39] subch#1

         0 0 0 0 0 0 0 0 0 0 0 0 0         [- 38:-26] subch#2

         0 0 0 0 0 0 0 0 0 0 0 0           [- 25:-14] subch#3

         0 0 0 0 0 0 0 0 0 0 0 0 0         [- 13:- 1] subch#4

         0                                  [DC]

         0 +1 0 -1 0 +1 0 +1 0 -1 0 -1 0   [   1: 13] subch#1

         0 0 0 0 0 0 0 0 0 0 0 0           [  14: 25] subch#2

         0 0 0 0 0 0 0 0 0 0 0 0 0         [  26: 38] subch#3

         0 0 0 0 0 0 0 0 0 0 0 0           [  39: 50] subch#4

         0 -1 0 -1 0 -1 0 -1 0 +1 0 -1 0   [  51: 63] subch#1

         0 0 0 0 0 0 0 0 0 0 0             [  64: 75] subch#2

         0 0 0 0 0 0 0 0 0 0 0 0 0         [  76: 88] subch#3

         0 0 0 0 0 0 0 0 0 0 0 0           [  89:100] subch#4
```

}*sqrt(2)*sqrt(2)

where (n$_x$:n$_y$)represents subcarriers of n$_x$$^{th}$ to n$_y$$^{th}$ subcarriers.

**17.** The apparatus of claim 15, wherein if m=256, p=4, the number of the selected subchannels is 1, the selected one subchannel is a subchannel #1 which is a first subchannel among the 4 subchannels, then the given sequence is P211subcb(-100:100) given by

P211subch(-100:100)={

```
         0 0 0 0 0 0 0 0 0 0 0 0           [-100:-89] subch#3
```

```
-1 0 +1 0 +1 0 -1 0 -1 0 -1 0 -1          [- 88:-76] subch#1

 0 0 0 0 0 0 0 0 0 0 0 0                   [- 75:-64] subch#4

 0 0 0 0 0 0 0 0 0 0 0 0                   [- 63:-51] subch#2

+1 0 -1 0 -1 0 +1 0 -1 0 -1 0             [- 50:-39] subch#1

 0 0 0 0 0 0 0 0 0 0 0 0 0                 [- 38:-26] subch#3

 0 0 0 0 0 0 0 0 0 0 0 0                   [- 25:-14] subch#2

 0 0 0 0 0 0 0 0 0 0 0 0 0                 [- 13:- 1] subch#4

 0                                         [DC]

 0 +1 0 -1 0 +1 0 -1 0 +1 0 -1 0          [   1: 13] subch#1

 0 0 0 0 0 0 0 0 0 0 0 0                   [  14: 25] subch#3

 0 0 0 0 0 0 0 0 0 0 0 0 0                 [  26: 38] subch#2

 0 0 0 0 0 0 0 0 0 0 0 0                   [  39: 50] subch#4

 0 0 0 0 0 0 0 0 0 0 0 0 0                 [  51: 63] subch#3

-1 0 -1 0 +1 0 +1 0 +1 0 +1 0            [  64: 75] subch#1

 0 0 0 0 0 0 0 0 0 0 0 0 0                 [  76: 88] subch#4

 0 0 0 0 0 0 0 0 0 0 0 0                   [  89:100] subch#2

}*sqrt(2)*sqrt(2)
```

where $(n_x:n_y)$ represents subcarriers of $n_x^{th}$ to $n_y^{th}$ subcarriers.

**18.** The apparatus of claim 15, wherein if m=256, p=4, the number of the selected subchannels is 1, the selected one subchannel is a subchannel #2 which is a second subchannel among the 4 subchannels, then the given sequence is P112subch(-100:100) given by

```
P112subch(-100:100)={

 0 0 0 0 0 0 0 0 0 0 0 0                   [-100:-89] subch#1
```

```
        -1 0 -1 0 -1 0 +1 0 -1 0 +1 0 +1        [- 88:-76] subch#2

         0 0 0 0 0 0 0 0 0 0 0 0               [- 75:-64] subch#3

         0 0 0 0 0 0 0 0 0 0 0 0               [- 63:-51] subch#4

         0 0 0 0 0 0 0 0 0 0 0 0               [- 50:-39] subch#1

        -1 0 +1 0 -1 0 -1 0 +1 0 -1 0 -1        [- 38:-26] subch#2

         0 0 0 0 0 0 0 0 0 0 0 0               [- 25:-14] subch#3

         0 0 0 0 0 0 0 0 0 0 0 0               [- 13:- 1] subch#4

         0                                     [DC]

         0 0 0 0 0 0 0 0 0 0 0 0               [  1: 13] subch#1

        +1 0 -1 0 -1 0 +1 0 +1 0 +1 0          [ 14: 25] subch#2

         0 0 0 0 0 0 0 0 0 0 0 0               [ 26: 38] subch#3

         0 0 0 0 0 0 0 0 0 0 0 0               [ 39: 50] subch#4

         0 0 0 0 0 0 0 0 0 0 0 0               [ 51: 63] subch#1

        +1 0 -1 0 +1 0 +1 0 +1 0 -1 0          [ 64: 75] subch#2

         0 0 0 0 0 0 0 0 0 0 0 0               [ 76: 88] subch#3

         0 0 0 0 0 0 0 0 0 0 0                 [ 89:100] subch#4

    }*sqrt(2)*sqrt(2)
```

where $(n_x:n_y)$ represents subcarriers of $n_x{}^{th}$ to $n_y{}^{th}$ subcarriers.

19. The apparatus of claim 15, wherein if m=256, p=4, the number of the selected subchannels is 1, the selected one subchannel is a subchannel #2 which is a second subchannel among the 4 subchannels, then the given sequence is P212subch(-100:100) given by

```
    P212subch(-100:100)={

         0 0 0 0 0 0 0 0 0 0 0 0               [-100:-89] subch#3

         0 0 0 0 0 0 0 0 0 0 0 0               [- 88:-76] subch#1
```

```
0 0 0 0 0 0 0 0 0 0 0 0              [- 75:-64] subch#4

0 -1 0 +1 0 -1 0 +1 0 -1 0 +1 0     [- 63:-51] subch#2

0 0 0 0 0 0 0 0 0 0 0 0             [- 50:-39] subch#1

0 0 0 0 0 0 0 0 0 0 0 0 0           [- 38:-26] subch#3

0 -1 0 -1 0 +1 0 +1 0 +1 0 +1       [- 25:-14] subch#2

0 0 0 0 0 0 0 0 0 0 0 0 0           [- 13:- 1] subch#4

0                                   [DC]

0 0 0 0 0 0 0 0 0 0 0 0 0           [  1: 13] subch#1

0 0 0 0 0 0 0 0 0 0 0 0             [ 14: 25] subch#3

-1 0 +1 0 -1 0 -1 0 +1 0 -1 0 -1    [ 26: 38] subch#2

0 0 0 0 0 0 0 0 0 0 0 0             [ 39: 50] subch#4

0 0 0 0 0 0 0 0 0 0 0 0 0           [ 51: 63] subch#3

0 0 0 0 0 0 0 0 0 0 0 0             [ 64: 75] subch#1

0 0 0 0 0 0 0 0 0 0 0 0 0           [ 76: 88] subch#4

0 +1 0 +1 0 -1 0 -1 0 +1 0 +1       [ 89:100] subch#2

}*sqrt(2)*sqrt(2)
```

where ($n_x$:$n_y$) represents subcarriers of $n_x^{th}$ to $n_y^{th}$ subcarriers.

20. The apparatus of claim 15, wherein if m=256, p=4, the number of the selected subchannels is 1, the selected one subchannel is a subchannel #3 which is a third subchannel among the 4 subchannels, then the given sequence is P113subch(-100:100) given by

```
P113subch(-100:100)={

0 0 0 0 0 0 0 0 0 0 0 0            [-100:-89] subch#1

0 0 0 0 0 0 0 0 0 0 0 0            [- 88:-76] subch#2

0 -1 0 -1 0 +1 0 -1 0 -1 0 -1     [- 75:-64] subch#3
```

```
0 0 0 0 0 0 0 0 0 0 0 0 0        [- 63:-51] subch#4

0 0 0 0 0 0 0 0 0 0 0 0          [- 50:-39] subch#1

0 0 0 0 0 0 0 0 0 0 0 0 0        [- 38:-26] subch#2

0 -1 0 +1 0 -1 0 -1 0 +1 0 +1   [- 25:-14] subch#3

0 0 0 0 0 0 0 0 0 0 0 0 0        [- 13:- 1] subch#4

0                                [DC]

0 0 0 0 0 0 0 0 0 0 0 0 0        [   1: 13] subch#1

0 0 0 0 0 0 0 0 0 0 0 0          [  14: 25] subch#2

-1 0 +1 0 +1 0 +1 0 -1 0 -1 0 -1 [  26: 38] subch#3

0 0 0 0 0 0 0 0 0 0 0 0          [  39: 50] subch#4

0 0 0 0 0 0 0 0 0 0 0 0 0        [  51: 63] subch#1

0 0 0 0 0 0 0 0 0 0 0 0          [  64: 75] subch#2

-1 0 +1 0 +1 0 +1 0 +1 0 -1 0 +1 [  76: 88] subch#3

0 0 0 0 0 0 0 0 0 0 0 0          [  89:100] subch#4

}*sqrt(2)*sqrt(2)
```

where $(n_x:n_y)$ represents subcarriers of $n_x$th to $n_y$th subcarriers.

**21.** The apparatus of claim 15, wherein if m=256, p=4, the number of the selected subchannels is 1, the selected one subchannel is a subchannel #3 which is a third subchannel among the 4 subchannels, then the given sequence is P213subch(-100:100) given by

```
P213subch(-100:100)={

-1 0 -1 0 +1 0 +1 0 -1 0 -1 0    [-100:-89] subch#3

0 0 0 0 0 0 0 0 0 0 0 0 0        [- 88:-76] subch#1

0 0 0 0 0 0 0 0 0 0 0 0 0        [- 75:-64] subch#4

0 0 0 0 0 0 0 0 0 0 0 0          [- 63:-51] subch#2
```

```
0 0 0 0 0 0 0 0 0 0 0 0 0          [- 50:-39] subch#1

+1 0 +1 0 -1 0 +1 0 +1 0 -1 0 +1   [- 38:-26] subch#3

0 0 0 0 0 0 0 0 0 0 0 0 0          [- 25:-14] subch#2

0 0 0 0 0 0 0 0 0 0 0 0 0          [- 13:- 1] subch#4

0                                  [DC]

0 0 0 0 0 0 0 0 0 0 0 0 0          [  1: 13] subch#1

-1 0 -1 0 -1 0 -1 0 +1 0 +1 0      [ 14: 25] subch#3

0 0 0 0 0 0 0 0 0 0 0 0 0          [ 26: 38] subch#2

0 0 0 0 0 0 0 0 0 0 0 0 0          [ 39: 50] subch#4

0 -1 0 +1 0 -1 0 +1 0 -1 0 +1 0    [ 51: 63] subch#3

0 0 0 0 0 0 0 0 0 0 0 0 0          [ 64: 75] subch#1

0 0 0 0 0 0 0 0 0 0 0 0 0          [ 76: 88] subch#4

0 0 0 0 0 0 0 0 0 0 0 0 0          [ 89:100] subch#2

}*sqrt(2)*sqrt(2)
```

where $(n_x:n_y)$ represents subcarriers of $n_x^{th}$ to $n_y$th subcarriers.

22. The apparatus of claim 15, wherein if m=256, p=4, the number of the selected subchannels is 1, the selected one subchannel is a subchannel #4 which is a fourth subchannel among the 4 subchannels, then the given sequence is P114subch(-100:100) given, by

```
P114subch(-100:100)={

0 0 0 0 0 0 0 0 0 0 0 0          [-100:-89] subch#1

0 0 0 0 0 0 0 0 0 0 0 0          [- 88:-76] subch#2

0 0 0 0 0 0 0 0 0 0 0 0          [- 75:-64] subch#3

0 -1 0 +1 0 +1 0 -1 0 -1 0 -1 0  [- 63:-51] subch#4

0 0 0 0 0 0 0 0 0 0             [- 50:-39] subch#1
```

```
0 0 0 0 0 0 0 0 0 0 0 0          [- 38:-26] subch#2

0 0 0 0 0 0 0 0 0 0 0 0          [- 25:-14] subch#3

0 +1 0 +1 0 +1 0 -1 0 +1 0 -1 0 [- 13:- 1] subch#4

0                               [DC]

0 0 0 0 0 0 0 0 0 0 0 0          [  1: 13] subch#1

0 0 0 0 0 0 0 0 0 0 0 0          [ 14: 25] subch#2

0 0 0 0 0 0 0 0 0 0 0 0          [ 26: 38] subch#3

0 +1 0 -1 0 +1 0 +1 0 -1 0 -1   [ 39: 50] subch#4

0 0 0 0 0 0 0 0 0 0 0 0          [ 51: 63] subch#1

0 0 0 0 0 0 0 0 0 0 0 0          [ 64: 75] subch#2

0 0 0 0 0 0 0 0 0 0 0 0          [ 76: 88] subch#3

0 -1 0 -1 0 -1 0 -1 0 +1 0 -1   [ 89:100] subch#4

}*sqrt(2)*sqrt(2)
```

where $(n_x:n_y)$ represents subcarriers of $n_x{}^{th}$ to $n_y{}^{th}$ subcarriers.

23. The apparatus of claim 15, wherein if m=256, p=4, the number of the selected subchannels is 1, the selected one subchannel is a subchannel #4 which is a fourth subchannel among the 4 subchannels, then the given sequence is P214subch(-100:100) given by

```
P214subch(-100:100)={

0 0 0 0 0 0 0 0 0 0 0 0          [-100:-89] subch#3

0 0 0 0 0 0 0 0 0 0 0 0          [- 88:-76] subch#1

0 -1 0 -1 0 -1 0 -1 0 +1 0 +1   [- 75:-64] subch#4

0 0 0 0 0 0 0 0 0 0 0 0          [- 63:-51] subch#2

0 0 0 0 0 0 0 0 0 0 0 0          [- 50:-39] subch#1

0 0 0 0 0 0 0 0 0 0 0 0          [- 38:-26] subch#3
```

```
0 0 0 0 0 0 0 0 0 0 0 0 0          [- 25:-14] subch#2

0 +1 0 -1 0 +1 0 -1 0 +1 0 -1 0   [- 13:- 1] subch#4

0                                  [DC]

0 0 0 0 0 0 0 0 0 0 0 0 0          [  1: 13] subch#1

0 0 0 0 0 0 0 0 0 0 0 0 0          [ 14: 25] subch#3

0 0 0 0 0 0 0 0 0 0 0 0 0          [ 26: 38] subch#2

0 +1 0 +1 0 -1 0 +1 0 +1 0 -1     [ 39: 50] subch#4

0 0 0 0 0 0 0 0 0 0 0 0 0          [ 51: 63] subch#3

0 0 0 0 0 0 0 0 0 0 0 0 0          [ 64: 75] subch#1

+1 0 +1 0 +1 0 +1 0 -1 0 -1 0 +1  [ 76: 88] subch#4

0 0 0 0 0 0 0 0 0 0 0 0 0          [ 89:100] subch#2

}*sqrt(2)*sqrt(2)
```

where $(n_x:n_y)$ represents subcarriers of $n_x{}^{th}$ to $n_y{}^{th}$ subcarriers.

**24.** The apparatus of claim 15, wherein if m=256, p =4, the number of the selected subchannels is 2, the selected two subchannel are a subchannel #1 which is a first subchannel and a subchannel #3 which is a third subchannel among the 4 subchannels, then the given sequence is P12(1+3)subch(-100:100) given by

```
P12(1+3)subch(-100:100)={

    -1 0 +1 0 +1 0 -1 0 +1 0 -1 0    [-100:-89] subch#1+subch#3

    0 0 0 0 0 0 0 0 0 0 0 0 0        [- 88:-76] subch#2+subch#4

    0 -1 0 +1 0 +1 0 +1 0 +1 0 +1    [- 75:-64] subch#1+subch#3

    0 0 0 0 0 0 0 0 0 0 0 0 0        [- 63:-51] subch#2+subch#4

    +1 0 +1 0 +1 0 -1 0 -1 0 -1 0    [- 50:-39] subch#1+subch#3

    0 0 0 0 0 0 0 0 0 0 0 0 0        [- 38:-26] subch#2+subch#4
```

```
0 -1 0 +1 0 -1 0 -1 0 -1 0 -1          [- 25:-14] subch#1+subch#3

0 0 0 0 0 0 0 0 0 0 0 0                 [- 13:- 1] subch#2+subch#4

0                                       [DC]

0 +1 0 +1 0 +1 0 -1 0 +1 0 +1 0        [  1: 13] subch#1+subch#3

0 0 0 0 0 0 0 0 0 0 0 0                 [ 14: 25] subch#2+subch#4

-1 0 +1 0 +1 0 -1 0 +1 0 +1 0 -1       [ 26: 38] subch#1+subch#3

0 0 0 0 0 0 0 0 0 0 0 0                 [ 39: 50] subch#2+subch#4

0 +1 0 +1 0 -1 0 +1 0 -1 0 +1 0        [ 51: 63] subch#1+subch#3

0 0 0 0 0 0 0 0 0 0 0 0                 [ 64: 75] subch#2+subch#4

-1 0 -1 0 -1 0 +1 0 -1 0 -1 0 -1       [ 76: 88] subch#1+subch#3

0 0 0 0 0 0 0 0 0 0 0 0                 [ 89:100] subch#2+subch#4

)*sqrt(2)*sqrt(2)
```

where $(n_x:n_y)$ represents subcarriers of $n_x{}^{th}$ to $n_y{}^{th}$ subcarriers.

25. The apparatus of claim 15, wherein if m=256, p=4, the number of the selected subchannels is 2, the selected two subchannel are a subchannel #1 which is a first subchannel and a subchannel #2 which is a second subchannel among the 4 subchannels, then the given sequence is P22(1+2)subch(-100:100) given by

```
P22(1+2)subch(-100:100)={

    0 0 0 0 0 0 0 0 0 0 0 0              [-100:-89] subch#3+subch#4

    +1 0 +1 0 +1 0 +1 0 -1 0 -1 0 -1    [- 88:-76] subch#1+subch#2

    0 0 0 0 0 0 0 0 0 0 0 0             [- 75:-64] subch#3+subch#4

    0 +1 0 -1 0 +1 0 +1 0 +1 0 +1 0    [- 63:-51] subch#1+subch#2

    0 0 0 0 0 0 0 0 0 0 0 0             [- 50:-39] subch#3+subch#4

    -1 0 +1 0 -1 0 +1 0 +1 0 +1 0 +1   [- 38:-26] subch#1+subch#2
```

```
0 0 0 0 0 0 0 0 0 0 0            [- 25:-14] subch#3+subch#4

0 -1 0 +1 0 +1 0 -1 0 -1 0 -1 0 [- 13:- 1] subch#1+subch#2

0                               [DC]

0 +1 0 -1 0 -1 0 +1 0 +1 0 +1 0 [   1: 13] subch#1+subch#2

0 0 0 0 0 0 0 0 0 0 0           [  14: 25] subch#3+subch#4

-1 0 +1 0 +1 0 -1 0 -1 0 +1 0 -1 [  26: 38] subch#1+subch#2

0 0 0 0 0 0 0 0 0 0 0           [  39: 50] subch#3+subch#4

0 +1 0 -1 0 +1 0 +1 0 +1 0 +1 0 [  51: 63] subch#1+subch#2

0 0 0 0 0 0 0 0 0 0 0           [  64: 75] subch#3+subch#4

-1 0 -1 0 -1 0 +1 0 +1 0 -1 0 +1 [  76: 88] subch#1+subch#2

0 0 0 0 0 0 0 0 0 0 0           [ 89:100] subch#3+subch#4

}*sqrt(2)*sqrt(2)
```

where $(n_x:n_y)$ represents subcarriers of $n_x{}^{th}$ to $n_y{}^{th}$ subcarriers.

26. The apparatus of claim 15, wherein if m=256, p=4, the number of the selected subchannels is 2, the selected two subchannel are a subchannel #2 which is a second subchannel and a subchannel #4 which is a fourth subchannel among the 4 subchannels, then the given sequence is P12(2+4)subch(-100:100) given by

```
P12(2+4)subch(-100:100)={

0 0 0 0 0 0 0 0 0 0 0           [-100:-89] subch#1+subch#3

-1 0 -1 0 +1 0 -1 0 +1 0 -1 0 +1 [- 88:-76] subch#2+subch#4

0 0 0 0 0 0 0 0 0 0 0           [- 75:-64] subch#1+subch#3

0 -1 0 +1 0 -1 0 +1 0 +1 0 -1 0 [- 63:-51] subch#2+subch#4

0 0 0 0 0 0 0 0 0 0 0           [- 50:-39] subch#1+subch#3

-1 0 -1 0 +1 0 +1 0 -1 0 +1 0 -1 [- 38:-26] subch#2+subch#4
```

```
0 0 0 0 0 0 0 0 0 0 0 0            [- 25:-14] subch#1+subch#3

0 -1 0 +1 0 -1 0 +1 0 +1 0 -1 0   [- 13:- 1] subch#2+subch#4

0                                 [DC]

0 0 0 0 0 0 0 0 0 0 0 0 0         [  1: 13] subch#1+subch#3

+1 0 +1 0 +1 0 -1 0 +1 0 +1 0     [ 14: 25] subch#2+subch#4

0 0 0 0 0 0 0 0 0 0 0 0 0         [ 26: 38] subch#1+subch#3

0 +1 0 +1 0 -1 0 -1 0 +1 0 +1     [ 39: 50] subch#2+subch#4

0 0 0 0 0 0 0 0 0 0 0 0 0         [ 51: 63] subch#1+subch#3

-1 0 -1 0 -1 0 -1 0 +1 0 -1 0     [ 64: 75] subch#2+subch#4

0 0 0 0 0 0 0 0 0 0 0 0 0         [ 76: 88] subch#1+subch#3

0 +1 0 +1 0 +1 0 -1 0 -1 0 -1     [ 89:100] subch#2+subch#4

}*sqrt(2)*sqrt(2)
```

where $(n_x : n_y)$ represents subcarriers of $n_x^{th}$ to $n_y^{th}$ subcarriers.

27. The apparatus of claim 15, wherein if m=256, p=4, the number of the selected subchannels is 2, the selected two subchannel are a subchannel #3 which is a third subchannel and a subchannel #4 which is a fourth subchannel among the 4 subchannels, then the given sequence is P22(3+4)subch(-100:100) given by

```
P22(3+4)subch(-100:100)={

+1 0 -1 0 +1 0 +1 0 -1 0 +1 0     [-100:-89] subch#3+subch#4

0 0 0 0 0 0 0 0 0 0 0 0           [- 88:-76] subch#1+subch#2

0 +1 0 +1 0 +1 0 -1 0 +1 0 +1     [- 75:-64] subch#3+subch#4

0 0 0 0 0 0 0 0 0 0 0 0           [- 63:-51] subch#1+subch#2

+1 0 -1 0 +1 0 +1 0 -1 0 +1 0     [- 50:-39] subch#3+subch#4

0 0 0 0 0 0 0 0 0 0 0 0           [- 38:-26] subch#1+subch#2
```

```
0 -1 0 +1 0 -1 0 +1 0 -1 0 +1        [- 25:-14] subch#3+subch#4

0 0 0 0 0 0 0 0 0 0 0 0              [- 13:- 1] subch#1+subch#2

0                                    [DC]

0 0 0 0 0 0 0 0 0 0 0 0              [  1: 13] subch#1+subch#2

-1 0 +1 0 -1 0 -1 0 -1 0 +1 0        [ 14: 25] subch#3+subch#4

0 0 0 0 0 0 0 0 0 0 0 0              [ 26: 38] subch#1+subch#2

0 +1 0 +1 0 +1 0 -1 0 -1 0 -1        [ 39: 50] subch#3+subch#4

0 0 0 0 0 0 0 0 0 0 0 0              [ 51: 63] subch#1+subch#2

-1 0 +1 0 -1 0 -1 0 -1 0 +1 0        [ 64: 75] subch#3+subch#4

0 0 0 0 0 0 0 0 0 0 0 0              [ 76: 88] subch#1+subch#2

0 +1 0 -1 0 -1 0 +1 0 +1 0 +1        [ 89:100] subch#3+subch#4

)*sqrt(2)*sqrt(2)
```

where $(n_x:n_y)$ represents subcarriers of $n_x$<sup>th</sup> to $n_y$<sup>th</sup> subcarriers.

**28.** The apparatus of claim 15, wherein all of the subcarriers except the n subcarriers assigned to the subchannels are subcarriers corresponding to an interference-removed component between a DC component and the subcarriers.

| CP | 64 | 64 | 64 | 64 | CP | 128 | 128 |
|----|----|----|----|----|----|-----|-----|

# FIG.1

| CP | 128 | 128 |
|----|-----|-----|

# FIG.2

S(-100:100)
OR
P(-100:100)
OR
P11subch(-100:100)
OR
P12subch(-100:100)
OR
P21subch(-100:100)
OR
P22subch(-100:100)

ALL NULL

ALL NULL

IFFT

FIG.3

FIG.4

1. WHEN ALL SUBCHANNELS ARE USED,
   P(-100:100) IS INSERTED

2. WHEN ONLY ONE SUBCHANNEL IS
   USED, DATA IS INSERTED INTO ONLY
   CORRESPONDING SUBCHANNELS IN
   P111subch(-100:100) OR
   P112subch(-100:100) OR
   P113subch(-100:100) OR
   P114subch(-100:100) OR
   P211subch(-100:100) OR
   P212subch(-100:100) OR
   P213subh(-100:100) OR
   P214subch(-100:100),
   AND NULL DATA IS INSERTED
   INTO REMAINING SUBCHANNELS

3. WHEN ONLY TWO SUBCHANNELS ARE
   USED, DATA IS INSERTED INTO ONLY
   CORRESPONDING SUBCHANNELS IN
   P12(1+3)subch(-100:100) OR
   P12(2+4)subch(-100:100) OR
   P21(2+4)subch(-100:100) OR
   P22(3+4)subch(-100:100),
   AND NULL DATA IS INSERTED
   INTO REMAINING SUBCHANNELS

ALL NULL

ALL NULL

0 — 0(DC)
1
:
13 — SUBCH #1(SUBCH #1)
14
:
25 — SUBCH #2(SUBCH #3)
26
:
38 — SUBCH #3(SUBCH #2)
39
:
50 — SUBCH #4(SUBCH #4)
51
:
63 — SUBCH #1(SUBCH #3)
64
:
75 — SUBCH #2(SUBCH #1)
76
:
88 — SUBCH #3(SUBCH #4)
89
:
100 — SUBCH #4(SUBCH #2)
101
:
127
-128
:
-101
-100
:
-89 — SUBCH #1(SUBCH #1)
-88
:
-76 — SUBCH #2(SUBCH #1)
-75
:
-64 — SUBCH #3(SUBCH #4)
-63
:
-51 — SUBCH #4(SUBCH #2)
-50
:
-39 — SUBCH #1(SUBCH #1)
-38
:
-26 — SUBCH #2(SUBCH #3)
-25
:
-14 — SUBCH #3(SUBCH #2)
-13
:
-1 — SUBCH #4(SUBCH #4)

IFFT

FIG.5

EP 1 404 079 A2

START

611

NO ◄─── UPLINK?

│ YES

615

ALL SUBCHANNELS USED? ───NO───► 619

ONLY ONE SUBCHANNEL USED? ───NO───►

613 │ YES 617

APPLY S(-100:100) OR P(-100:100) TO IFFT INPUT TERMINAL (FOR DOWNLINK)

APPLY P(-100:100) TO IFFT INPUT TERMINAL

621 │ YES

APPLY ONLY CORRESPONDING SUBCHANNELS IN
P111subch(-100:100) OR
P112subch(-100:100) OR
P113subch(-100:100) OR
P114subch(-100:100) OR
P211subch(-100:100) OR
P212subch(-100:100) OR
P213subch(-100:100) OR
P214subch(-100:100) OR
TO IFFT INPUT TERMINAL.
AND 0 IS INSERTED
INTO REMAINING SUBCHANNELS

623

APPLY ONLY CORRESPONDING SUBCHANNELS IN
P12(1+3)subch(-100:100) OR
P12(2+4)subch(-100:100) OR
P22(1+2)subch(-100:100) OR
P22(3+4)subch(-100:100) OR
TO IFFT INPUT TERMINAL,
AND 0 IS INSERTED
INTO REMAINING SUBCHANNELS

END

FIG.6